(19) Europäisches Patentamt / European Patent Office / Office européen des brevets

(11) **EP 3 122 524 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **15711167.5**

(22) Anmeldetag: **20.03.2015**

(51) Int Cl.:
*B27N 3/00* (2006.01)          *C09D 133/12* (2006.01)
*C08K 5/15* (2006.01)          *C08K 5/34* (2006.01)
*C08K 5/45* (2006.01)          *C08K 5/46* (2006.01)
*C08K 5/47* (2006.01)          *C08L 23/08* (2006.01)
*C08L 25/04* (2006.01)          *C08L 25/06* (2006.01)
*C08L 33/12* (2006.01)

(86) Internationale Anmeldenummer:
**PCT/EP2015/055896**

(87) Internationale Veröffentlichungsnummer:
**WO 2015/144577 (01.10.2015 Gazette 2015/39)**

(54) **LIGNOCELLULOSEWERKSTOFFWERKSTOFFE, DIE MIT POLYMERPARTIKELN, ENTHALTEND FLUORESZENZFARBSTOFF, MARKIERT SIND**

LABELLED LIGNOCELLULOSIC COMPOSITIONS COMPRISING FLUORESCENT POLYMER PARTICLES

COMPOSITIONS LIGNOCELLULOSIQUES COMPRENANT PARTICULES FLUORESCENTES POLYMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2014 EP 14162407**

(43) Veröffentlichungstag der Anmeldung:
**01.02.2017 Patentblatt 2017/05**

(73) Patentinhaber: **BASF SE**
**67056 Ludwigshafen am Rhein (DE)**

(72) Erfinder:
• **ASSMANN, Jens**
  **67435 Neustadt (DE)**
• **LUNKWITZ, Ralph**
  **67434 Neustadt (DE)**
• **KAUB, Hans-Peter**
  **67122 Altrip (DE)**
• **NEUMANN, Jürgen**
  **67459 Böhl-Iggelheim (DE)**
• **SCHRÖDER-GRIMONPONT, Tina**
  **76751 Jockgrim (DE)**

(74) Vertreter: **BASF IP Association**
**BASF SE**
**G-FLP-C006**
**67056 Ludwigshafen (DE)**

(56) Entgegenhaltungen:
EP-A1- 0 692 517          EP-A1- 1 582 539
EP-A1- 1 801 127          WO-A1-03/020854
WO-A1-2007/074041          WO-A1-2014/005877
JP-A- H08 188 991          US-A- 5 294 664

• NAGAO D ET AL: "Preparation of highly monodisperse poly(methyl methacrylate) particles incorporating fluorescent rhodamine 6G for colloidal crystals", JOURNAL OF COLLOID AND INTERFACE SCIENCE, ACADEMIC PRESS, NEW YORK, NY, US, Bd. 298, Nr. 1, 1. Juni 2006 (2006-06-01), Seiten 232-237, XP024909626, ISSN: 0021-9797, DOI: 10.1016/J.JCIS.2005.10.052 [gefunden am 2006-06-01]

**Beschreibung**

Die vorliegende Erfindung betrifft Lignocellulosewerkstoffe, die mit Polymeren, enthaltend Fluoreszenzfarbstoff, markiert sind.

Aus der WO-A-2005/118650 und der WO-A-2007/074041 sind Verfahren zum Markieren von Materialien mit kodierten Mikropartikeln bekannt. Diese kodierten Mikropartikel werden z.B. zur Markierung von Materialien wie Dispersionen, Beschichtungen, Anstrichfarben, Polymere, insbesondere Papier und Papierleimungsmitteln wie Harzleim, insbesondere Papierverpackungen, Banknoten und Sicherheitspapiere sowie alle Gegenstände, die mit einer Kennzeichnung versehen sind, empfohlen.

Aus der DE-U-20108991 ist die Markierung von Holzpellets mit Kennzeichnungs- oder Markierungselementen (Codierungselementen) wie z.B. Holz, Kork, Presskarton, Kunststoff oder dergleichen bekannt, wobei Kennzeichnungen oder Markierungen aus Metall, elektrisch oder magnetisch leitenden Teilchen oder Überzügen, von außen identifizierbaren Speicherchips, herstellerbezogenen entsprechenden Markierungen oder Codierungen, wie einer fluoreszierenden Oberfläche, bestehen oder mit einer maschinell auslesbaren Codierung geimpft sind.

Der vorliegenden Erfindung lag die Aufgabe zugrunde, Holzwerkstoffe zu markieren.

Demgemäß wurden neue Lignocellulosewerkstoffe, die

A) 30 bis 98,9997 Gew.-% lignocellulosehaltige Stoffe (Komponente A),
B) 1 bis 50 Gew.-% eines Bindemittels, ausgewählt aus der Gruppe bestehend aus Aminoplastharz, Phenolformaldehydharz, organischem Isocyanat mit mindestens zwei Isocyanatgruppen oder deren Gemischen, gegebenenfalls mit einem Härter (Komponente B),
C) 0 bis 25 Gew.-% expandierte Kunststoffteilchen mit der Schüttdichte im Bereich von 10 bis 150 kg/m$^3$ (Komponente C) und
D) 0 bis 50 Gew.-% mikrofibrillierte Cellulose (Komponente D),
E) 0 bis 10 Gew.-% Dekorpapier (Komponente E),
F) 0 bis 10 Gew.-% Dekorlack (Komponente F),
G) 0 bis 50 Gew.-% Additive (Komponente G),
H) 0,0003 bis 3 Gew.-% eines Markierungsmittels (Komponente H),

gefunden, welche dadurch gekennzeichnet sind, dass das Markierungsmittel (Komponente H) Polymerpartikel mit einer Teilchengrößenverteilung im Bereich von 0,05 bis 50 μm sind, in die der Fluoreszenzfarbstoff eingebettet ist.

Das Markierungsmittel (Komponente H) kann in einem oder mehreren der nachfolgenden Komponenten enthalten sein:

a) im lignocellulosehaltigen Stoff (Komponente A),
b) im Bindemittel (Komponente B),
c) in den expandierten Kunststoffteilchen (Komponente C),
d) im Dekorpapier (Komponente E) oder
e) im Dekorlack (Komponente F),

bevorzugt im Bindemittel (Komponente B), im Dekorpapier (Komponente E), im Dekorlack (Komponente F) oder in zwei oder allen drei Komponenten gleichzeitig, besonders bevorzugt im Bindemittel (Komponente B), im Dekorpapier (Komponente E) oder in beiden Komponenten gleichzeitig.

Das Dekorpapier (Komponente E) bzw. der Dekorlack (Komponente F) befinden sich in der Regel auf mindestens einer der Oberflächen oder auf mindestens einer der Kanten des Lignocellulosewerkstoffes, also des Formstückes, z.B. einer Lignocellulosewerkstoffplatte.

Ferner betrifft die vorliegende Erfindung die Verwendung einer wässrigen Dispersion von Polymeren, die einen oder mehrere Fluoreszenzfarbstoffe enthalten, für die Markierung von Lignocellulosewerkstoffen, wobei der Gewichtsanteil der Fluoreszenfarbstoff(e) enthaltenden Polymere in der wässrigen Dispersion 0,00005 bis 70 Gew.-%, bevorzugt 0,0005 bis 60 Gew.-%, besonders bevorzugt 0,005 bis 50 Gew.-%, insbesondere 0,01 bis 30 Gew.-%.

Der lignocellulosehaltige Stoff kann auch mit einer wässrigen Dispersion von Polymeren, die einen Fluoreszenzfarbstoff enthalten, vorbehandelt werden, wobei das Gewichtsverhältnis von wässriger Dispersion zum lignocellulosehaltigen Stoff in der Regel 0,001:1 bis 0,2:1, bevorzugt 0,01:1 bis 0,1:1, besonders bevorzugt 0,01:1 bis 0,05:1 mit einer Flüssigkeit gemischt beträgt, bevor die Komponenten B bis D und G mit dem behandelten lignocellulosehaltigen Stoff gemischt werden

In einer weiteren Ausführungsform wird Komponente B) mit einer wässrigen Dispersion von Polymeren, die einen Fluoreszenzfarbstoff enthalten, vorbehandelt, wobei das Gewichtsverhältnis von wässriger Dispersion zur Komponente B) in der Regel 0,0001:1 bis 0,2:1, bevorzugt 0,01:1 bis 0,1:1, besonders bevorzugt 0,01:1 bis 0,05:1 beträgt, bevor die Komponenten A, C, D und G mit der behandelten Komponente B) gemischt werden.

In einer weiteren Ausführungsform wird Komponente C) mit einer wässrigen Dispersion von Polymeren, die einen Fluoreszenzfarbstoff enthalten, vorbehandelt, wobei das Gewichtsverhältnis von wässriger Dispersion zur Komponente C) in der Regel 0,0001:1 bis 0,2:1, bevorzugt 0,01:1 bis 0,1:1, besonders bevorzugt 0,01:1 bis 0,05:1 beträgt, bevor die Komponenten A, B, D und G mit der behandelten Komponente C) gemischt werden.

In einer weiteren Ausführungsform wird Komponente D) mit einer wässrigen Dispersion von Polymeren, die einen Fluoreszenzfarbstoff enthalten, vorbehandelt, wobei das Gewichtsverhältnis von wässriger Dispersion zur Komponente D) in der Regel 0,0001:1 bis 0,2:1, bevorzugt 0,01:1 bis 0,1:1, besonders bevorzugt 0,01:1 bis 0,05:1 beträgt, bevor die Komponenten A, B, C und G mit der behandelten Komponente D) gemischt werden.

In einer weiteren Ausführungsform wird Komponente E) mit einer wässrigen Dispersion von Polymeren, die einen Fluoreszenzfarbstoff enthalten, vorbehandelt, wobei das Gewichtsverhältnis von wässriger Dispersion zur Komponente E) in der Regel 0,0001:1 bis 0,2:1, bevorzugt 0,01:1 bis 0,1:1, besonders bevorzugt 0,01:1 bis 0,05:1 beträgt, bevor die behandelte Komponente E) zur Beschichtung eines Lignocellulosewerkstoffs bestehend aus den Komponenten A, B, C, D, F und G verwendet wird.

In einer weiteren Ausführungsform wird Komponente F) mit einer wässrigen Dispersion von Polymeren, die einen Fluoreszenzfarbstoff enthalten, vorbehandelt, wobei das Gewichtsverhältnis von wässriger Dispersion zur Komponente F) in der Regel 0,0001:1 bis 0,2:1, bevorzugt 0,01:1 bis 0,1:1, besonders bevorzugt 0,01:1 bis 0,05:1 beträgt, bevor die behandelte Komponente F) zur Beschichtung eines Lignocellulosewerkstoffs bestehend aus den Komponenten A, B, C, D, E und G verwendet wird.

In einer weiteren Ausführungsform wird Komponente G) mit einer wässrigen Dispersion von Polymeren, die einen Fluoreszenzfarbstoff enthalten, vorbehandelt, wobei das Gewichtsverhältnis von wässriger Dispersion zur Komponente G) in der Regel 0,0001:1 bis 0,2:1, bevorzugt 0,01:1 bis 0,1:1, besonders bevorzugt 0,01:1 bis 0,05:1 beträgt, bevor die Komponenten A, B, C, und D mit der behandelten Komponente G) gemischt werden.

Der Lignocellulosewerkstoff kann teilweise oder vollständig markiert werden, bevorzugt wird der gesamte Lignocellulosewerkstoff markiert, wobei die Markierung homogen, also gleichmäßig, oder heterogen, also ungleichmäßig (unterschiedliche Konzentrationen im Lignocellulosewerkstoff) verteilt bevorzugt homogen verteilt vorliegt.

In einer weiteren bevorzugten Ausführungsform kann die Markierung ausschließlich auf mindestens einer der Oberflächen oder Kanten des Lignocellulosewerkstoffs vorliegen, wobei die Markierung maximal 10 mm (also 0 bis 10 mm), bevorzugt maximal 5 mm (also 0 bis 5 mm), besonders bevorzugt maximal 1 mm (also 0 bis 1 mm) tief in den Lignocellulosewerkstoff eindringt.

Der Begriff Lignocellulosewerkstoff bedeutet ein- oder mehrschichtige, also ein bis fünfschichtige, bevorzugt ein- bis dreischichtige, besonders bevorzugt ein- oder dreischichtige Lignocellulosewerkstoffe. Als Lignocellulosewerkstoffe werden in diesem Zusammenhang gegebenenfalls furnierte Span-, OSB- oder Faserwerkstoffe, insbesondere Holzfaserwerkstoffe wie LDF-, MDF-und HDF-Werkstoffe, bevorzugt Span- oder Faserwerkstoffe, besonders bevorzugt Spanwerkstoffe verstanden. Werkstoffe sind u.a. Platten, Fliesen, Formteile, Halbzeuge oder Komposite, bevorzugt Platten, Fliesen, Formteile oder Komposite, besonders bevorzugt Platten.

Komponente A

Lignocellulosehaltige Stoffe sind Stoffe, die Lignocellulose enthalten. Der Gehalt an Lignocellulose kann in weiten Bereichen variiert werden und beträgt in der Regel 20 bis 100 Gew.-%, bevorzugt 50 bis 100 Gew.-%, besonders bevorzugt 85 bis 100 Gew.-%, insbesondere 100 Gew.-% Lignocellulose. Der Begriff Lignocellulose ist dem Fachmann bekannt.

Als ein- oder mehrere lignocellulosehaltige Stoffe eignen sich beispielsweise Stroh, holzfaserhaltige Pflanzen, Holz oder deren Gemische. Unter mehreren lignocellulosehaltigen Stoffen werden in der Regel 2 bis 10, bevorzugt 2 bis 5, besonders bevorzugt 2 bis 4, insbesondere 2 oder 3 unterschiedliche lignocellulosehaltige Stoffe verstanden.

Als Holz eignen sich Holzfasern oder Holzpartikel wie Holzlagen, Holzstreifen, Holzspäne, Holzstaub oder deren Gemische, bevorzugt Holzspäne, Holzfasern, Holzstaub oder deren Gemische, besonders bevorzugt Holzspäne, Holzfasern oder deren Gemische. Als holzfaserhaltige Pflanzen eigenen sich beispielsweise Flachs, Hanf oder deren Gemische.

Ausgangsmaterialien für Holzpartikel oder Holzfasern sind in der Regel Durchforstungshölzer, Industrieresthölzer und Gebrauchthölzer sowie holzfaserhaltige Pflanzen bzw. Pflanzenteile.

Für die Herstellung der Holzpartikel oder Holzfasern kommt jede beliebige Holzart wie Weich-oder Hartholz von Laub- oder Nadelhölzer, u.a. aus Industrierestholz oder Plantagenholz in Frage, bevorzugt Eukalyptus-, Fichten-, Buchen-, Kiefern-, Lärchen-, Linden-, Pappel-, Eschen-, Kastanien-, Tannenholz oder deren Gemische, besonders bevorzugt Eukalyptus-, Fichten-, Buchenholz oder deren Gemische, insbesondere Eukalyptus-, Fichtenholz oder deren Gemische.

Die lignocellulosehaltigen Stoffe werden erfindungsgemäß in der Regel zerkleinert und als Partikel oder Fasern eingesetzt.

Als Partikel eignen sich Sägespäne, Holzspäne, Hobelspäne, Holzpartikel, gegebenenfalls zerkleinertes Getreidestroh, Schäben, Baumwollstängel oder deren Gemische, bevorzugt Sägespäne, Hobelspäne, Holzspäne, Holzpartikel, Schäben oder deren Gemische, besonders bevorzugt Sägespäne, Hobelspäne, Holzspäne, Holzpartikel oder deren Gemische.

Die Dimensionen der zerkleinerten lignocellulosehaltigen Stoffe sind nicht kritisch und richten sich nach dem herzustellenden Lignocellulosewerkstoff.

Große Späne, die zum Beispiel für die Herstellung von OSB-Platten verwendet werden heißen auch Strands. Die mittlere Größe der Partikel zur Herstellung von OSB-Platten, Strands, beträgt in der Regel 20 bis 300 mm, bevorzugt 25 bis 200 mm, besonders bevorzugt 30 bis 150 mm.

Für die Herstellung von Spanplatten werden in der Regel kleiner Späne verwendet. Die dafür benötigten Partikel können mittels Siebanalyse der Größe nach klassifiziert werden. Die Siebanalyse wird zum Beispiel in der DIN 4188 oder der DIN ISO 3310 beschrieben. Die mittlere Größe der Partikel beträgt in der Regel 0,01 bis 30 mm, bevorzugt 0,05 bis 25 mm, besonders bevorzugt 0,1 bis 20 mm.

Als Fasern eignen sich Holzfasern, Cellulosefasern, Hanffasern, Baumwollfasern, Bambusfasern, Miscanthus, Bagasse oder deren Gemische, bevorzugt Holzfasern, Hanffasern, Bambusfasern, Miscanthus, Bagasse (Zuckerrohr) oder deren Gemische, besonders bevorzugt Holzfasern, Bambusfasern oder deren Gemische. Die Länge der Fasern beträgt in der Regel 0,01 bis 20 mm, bevorzugt 0,05 bis 15 mm, besonders bevorzugt 0,1 bis 10 mm.

Die Partikel oder Fasern liegen in der Regel auch sortenrein, d.h. wenn nur eine der zuvor genannten Sorten (z.B. Späne, Holzspäne bzw. Holzfasern) eingesetzt werden, als Gemische vor, deren einzelne Teile, Partikel oder Fasern sich in Größe und Gestalt unterscheiden.

Die Aufbereitung zu den gewünschten lignocellulosehaltigen Stoffen kann nach an sich bekannten Verfahren erfolgen (siehe zum Beispiel: M. Dunky, P. Niemz, Holzwerkstoffe und Leime, Seite 91 bis 156, Springer Verlag Heidelberg, 2002).

Die lignocellulosehaltigen Stoffe können nach üblichen, dem Fachmann bekannten Methoden der Trocknung mit den danach üblichen geringen Mengen Wasser (in einer üblichen geringen Schwankungsbreite; sog. "Restfeuchte") erhalten werden; dieses Wasser ist bei den Gewichtsangaben der vorliegenden Erfindung nicht berücksichtigt.

Die mittlere Dichte der erfindungsgemäßen lignocellulosehaltige Stoffe ist beliebig und lediglich vom eingesetzten lignocellulosehaltigen Stoff abhängig und liegt in der Regel bei 0,2 bis 0,9 $g/cm^3$, bevorzugt bei 0,4 bis 0,85 $g/cm^3$, besonders bevorzugt bei 0,4 bis 0,75 $g/cm^3$, insbesondere bei 0,4 bis 0,6 $g/cm^3$.

Bei einer mittleren Dichte im Bereich von 601 bis 1200 $kg/m^3$, bevorzugt 601 bis 850 $kg/m^3$, besonders bevorzugt 601 bis 800 $kg/m^3$, werden diese als höherdichte, bei einer mittleren Dichte im Bereich von 200 bis 600 $kg/m^3$, bevorzugt 300 bis 600 $kg/m^3$, besonders bevorzugt 350 bis 600 $kg/m^3$ als niedrigdichte lignocellulosehaltige Stoffe bezeichnet. Bei Faserplatten unterscheidet man zwischen hochdichten Faserplatten (HDF) mit einer Dichte $\geq$800 $kg/m^3$, mitteldichten Faserplatten (MDF) mit einer Dichte zwischen 650 und 800 $kg/m^3$ und leichten Faserplatten (LDF) mit einer Dichte $\leq$ 650 $kg/m^3$.

Komponente B

Als Bindemittel eignen sich Harze wie Phenolformaldehydharze, Aminoplastharze, organische Isoyanate mit mindestens 2 Isocyanatgruppen oder deren Gemische. Die Harze können für sich alleine, als einziger Harzbestandteil oder Kombination aus zwei oder mehreren Harzbestandteilen der unterschiedlichen Harze der Gruppe Phenolformaldehydharze, Aminoplastharze und organische Isoyanate mit mindestens 2 Isocyanatgruppen eingesetzt werden.

Phenolformaldehydharze

Phenolformaldehydharze (auch PF-Harze genannt) sind dem Fachmann bekannt, siehe zum Beispiel Kunststoff-Handbuch, 2. Auflage, Hanser 1988, Band 10 "Duroplaste", Seiten 12 bis 40,

Aminoplastharze

Als Aminoplastharze können alle dem Fachmann, vorzugsweise die für die Herstellung von Lignocellulosewerkstoffen bekannten, Aminoplastharze verwendet werden. Derartige Harze sowie ihre Herstellung sind beispielsweise in Ullmanns Enzyklopädie der technischen Chemie, 4., neubearbeitete und erweiterte Auflage, Verlag Chemie, 1973, Seiten 403 bis 424 "Aminoplaste" und Ullmann's Encyclopedia of Industrial Chemistry, Vol. A2, VCH Verlagsgesellschaft, 1985, Seiten 115 bis 141 "Amino Resins" sowie in M. Dunky, P. Niemz, Holzwerkstoffe und Leime, Springer 2002, Seiten 251 bis 259 (UF-Harze) und Seiten 303 bis 313 (MUF und UF mit geringer Menge Melamin) beschrieben und können durch Umsetzen der Carbamidgruppen-haltigen Verbindungen, vorzugsweise Harnstoff, Melamin oder deren Gemischen, mit den Aldehyden, vorzugsweise Formaldehyd, in den gewünschten Molverhältnissen Carbamidgruppe zum Aldehyd, vorzugsweise in Wasser als Lösungsmittel, hergestellt werden.

Das Einstellen des gewünschten molaren Verhältnisses Aldehyd, vorzugsweise Formaldehyd zum gegebenenfalls teilweise mit organischen Resten substituierten Amino-Gruppe kann auch durch Zusatz von $-NH_2$-Gruppen-tragenden Monomeren zu formaldehydreicheren fertigen, vorzugsweise kommerziellen, Aminoplastharzen erfolgen. $NH_2$-Gruppen-tragende Monomere sind vorzugsweise Harnstoff, Melamin oder deren Gemische, besonders bevorzugt Harnstoff.

Als Aminoplastharze werden bevorzugt Polykondensationsprodukte aus Verbindungen mit mindestens einer, gegebenenfalls teilweise mit organischen Resten substituierten, Carbamidgruppe (die Carbamidgruppe wird auch als Carboxamidgruppe bezeichnet) und einem Aldehyd, vorzugsweise Formaldehyd, verstanden; besonders bevorzugt Harnstoff-Formaldehydharze (UF-Harze), Melamin-Formaldehydharze (MF-Harze) oder melaminhaltige Harnstoff-Formaldehydharze (MUF-Harze), insbesondere Harnstoff-Formaldehydharze, beispielsweise Kaurit® Leim-Typen der Firma BASF SE. Weiterhin ganz bevorzugte Aminoplastharze sind Polykondensationsprodukte aus Verbindungen mit mindestens einer, auch teilweise mit organischen Resten substituierten, Aminogruppe und Aldehyd, worin das molare Verhältnis Aldehyd zum gegebenenfalls teilweise mit organischen Resten substituierten Amino-Gruppe im Bereich von 0,3:1 bis 1:1, bevorzugt 0,3:1 bis 0,6:1, besonders bevorzugt 0,3:1 bis 0,45:1, ganz besonders bevorzugt 0,3:1 bis 0,4:1 liegt.

Die genannten Aminoplastharze werden üblicherweise in flüssiger Form, meist in einem flüssigen Medium suspendiert, vorzugsweise in wässriger Suspension oder aber auch als Feststoff eingesetzt.

Der Feststoffgehalt der Aminoplastharz-Suspensionen, vorzugsweise der wässrigen Suspension, liegt üblicherweise bei 25 bis 90 Gew.-%, vorzugsweise bei 50 bis
70 Gew.-%.

Der Feststoffgehalt des Aminoplast-Harzes in wässriger Suspension kann nach Günter Zeppenfeld, Dirk Grunwald, Klebstoffe in der Holz- und Möbelindustrie, 2. Auflage, DRW-Verlag, Seite 268 bestimmt werden. Zur Bestimmung des Feststoffgehalts von Aminoplast-Leimen wird 1 g Aminoplast-Leim in eine Wagschale genau eingewogen, am Boden fein verteilt und 2 Stunden bei 120°C in einem Trockenschrank getrocknet. Nach Temperierung auf Raumtemperatur in einem Exsikkator wird der Rückstand gewogen und als prozentualer Anteil der Einwaage berechnet.

Die Gewichtsangabe des Bindemittels bezieht sich im Hinblick auf die Aminoplastkomponente im Bindemittel auf den Feststoffgehalt der entsprechenden Komponente (bestimmt durch Verdunsten des Wassers bei 120°C, innerhalb von 2 h nach Günter Zeppenfeld, Dirk Grunwald, Klebstoffe in der Holz- und Möbelindustrie, 2. Auflage, DRW-Verlag, Seite 268) und im Hinblick auf das Isocyanat, insbesondere das PMDI, auf die Isocyanatkomponente an sich, also zum Beispiel ohne Lösungsmittel oder Emulgiermedium.

Organische Isocyanate

Als organische Isocyanate eignen sich organische Isocyanate mit mindestens zwei Isocyanatgruppen oder deren Gemische, insbesondere alle dem Fachmann, vorzugsweise die für die Herstellung von Lignocellulosewerkstoffen oder Polyurethanen bekannten, organischen Isocyanate oder deren Gemische. Derartige organische Isocyanate sowie ihre Herstellung und Anwendung sind beispielsweise in Becker/Braun, Kunststoff Handbuch, 3. neubearbeitete Auflage, Band 7 "Polyurethane", Hanser 1993, Seiten 17 bis 21, Seiten 76 bis 88 und Seiten 665 bis 671 beschrieben.

Bevorzugte organische Isocyanate sind oligomere Isocyanate mit 2 bis 10, vorzugsweise 2 bis 8 Monomer-Einheiten und im Mittel mindestens einer Isocyanatgruppe pro Monomer-Einheit oder deren Gemische, besonders bevorzugt das oligomere organische Isocyanat PMDI ("Polymeres Methylendiphenylendiisocyanat") das erhältlich ist durch Kondensation von Formaldehyd mit Anilin und Phosgenierung der bei der Kondensation entstanden Isomeren und Oligomeren (siehe zum Beispiel Becker/Braun, Kunststoff Handbuch, 3. neubearbeitete Auflage, Band 7 "Polyurethane", Hanser 1993, Seiten 18 letzter Absatz bis Seite 19, zweiter Absatz und Seite 76, fünfter Absatz), ganz besonders bevorzugt Produkte der LUPRANAT®-Typenreihe der BASF SE, insbesondere LUPRANAT® M 20 FB der BASF SE.

Härter in der Komponente B

Das Bindemittel B) kann dem Fachmann bekannte Härter oder deren Gemische enthalten.

Als Härter eignen sich alle chemischen Verbindungen jeglichen Molekulargewichts, die die Polykondensation von Aminoplastharz oder Phenolformaldehydharz bewirken oder beschleunigen und solche, welche die Reaktion von organischem Isocyanat mit mindestens zwei Isocyanatgruppen mit Wasser oder anderen Verbindungen oder Substraten (zum Beispiel Holz), welche - OH oder -NH-, $-NH_2-$ oder =NH-Gruppen enthalten, bewirken oder beschleunigen.

Als Härter für Aminoplastharze oder Phenolformaldehydharze eignen sich solche, die die Weiterkondensation katalysieren wie Säuren oder deren Salze oder wässrige Lösungen dieser Salze.

Als Säuren eignen sich anorganische Säuren wie HCl, HBr, HI, $H_2SO_3$, $H_2SO_4$, Phosphorsäure, Polyphosphorsäure, Salpetersäure, Sulfonsäuren, beispielsweise p-Toluolsulfonsäure, Methansulfonsäure, Trifluormethansulfonsäure, Nonafluorbutansulfonsäure, Carbonsäuren wie $C_1$- bis $C_8$-Carbonsäuren beispielsweise Ameisensäure, Essigsäure, Propionsäure oder deren Gemische, bevorzugt anorganische Säuren wie HCl, $H_2SO_3$, $H_2SO_4$, Phosphorsäure, Polyphosphorsäure, Salpetersäure, Sulfonsäuren wie p-Toluolsulfonsäure, Methansulfonsäure, Carbonsäuren wie $C_1$- bis $C_8$-Carbonsäuren beispielsweise Ameisensäure, Essigsäure, besonders bevorzugt anorganische Säuren wie $H_2SO_4$, Phosphorsäure, Salpetersäure, Sulfonsäuren wie p-Toluolsulfonsäure, Methansulfonsäure, Carbonsäuren wie Ameisensäure, Essigsäure.

Als Salze eignen sich Halogenide, Sulfite, Sulfate, Hydrogensulfate, Carbonate, Hydrogencarbonate, Nitrite, Nitrate, Sulfonate, Salze von Carbonsäuren wie Formiate, Acetate, Propionate, bevorzugt Sulfite, Carbonate, Nitrate, Sulfonate, Salze von Carbonsäuren wie Formiate, Acetate, Propionate, besonders bevorzugt Sulfite, Nitrate, Sulfonate, Salze von Carbonsäuren wie Formiate, Acetate, Propionate, von protonierten, primären, sekundären und tertiären aliphatischen Aminen, Alkanolaminen, cyclischen, aromatischen Aminen wie $C_1$- bis $C_8$-Amine,Isopropylamin, 2-Ethylhexylamin, Di-(2-ethylhexyl)amin, Diethylamin, Dipropylamin, Dibutylamin, Diisopropylamin, tert-Butylamin, Triethylamin, Tripropylamin, Triisopropylamin, Tributylamin, Monoethanolamin, Morpholin, Piperidin, Pyridin, sowie Ammoniak, bevorzugt protonierte primäre, sekundäre, und tertiäre aliphatische Amine, Alkanolamine, cyclische Amine, cyclische aromatische Amine sowie Ammoniak, besonders bevorzugt protonierte Alkanolamine, cyclische Amine sowie Ammoniak oder deren Gemische.

Als Salze seien insbesondere genannt: Ammoniumchlorid, Ammoniumbromid, Ammoniumiodid, Ammoniumsulfat, Ammoniumsulfit, Ammoniumhydrogensulfat, Ammoniummethansulfonat, Ammonium-p-Toluolsulfonat, Ammoniumtrifluormethansulfonat, Ammoniumnonafluorbutansulfonat, Ammoniumphosphat, Ammoniumnitrat, Ammoniumformiat, Ammoniumacetat, Morpholiniumchlorid, Morpholiniumbromid, Morpholiniumiodid, Morpholiniumsulfat, Morpholiniumsulfit, Morpholiniumhydrogensulfat, Morpholiniummethansulfonat, Morpholinium-p-Toluolsulfonat, Morpholiniumtrifluormethansulfonat, Morpholiniumnonafluorbutansulfonat, Morpholiniumphosphat, Morpholiniumnitrat, Morpholiniumformiat, Morpholiniumacetat, Monoethanolammoniumchlorid, Monoethanolammoniumbromid, Monoethanolammoniumiodid, Monoethanolammoniumsulfat, Monoethanolammoniumsulfit, Monoethanolammoniumhydrogensulfat, Monoethanolammoniummethansulfonat, Monoethanolammonium-p-Toluolsulfonat, Monoethanolammoniumtrifluormethansulfonat, Monoethanolammoniumnonafluorbutansulfonat, Monoethanolammoniumphosphat, Monoethanolammoniumnitrat, Monoethanolammoniumformiat, Monoethanolammoniumacetat oder deren Gemische.

Ganz besonders bevorzugt werden die Salze in Form ihrer wässrigen Lösungen eingesetzt. Als wässrige Lösungen werden in diesem Zusammenhang verdünnte, gesättigte, übersättigte und auch teilgefällte Lösungen sowie gesättigte Lösungen mit einem Feststoffgehalt an nicht mehr lösbarem Salz verstanden.

Phenolformaldehydharze können auch alkalisch, bevorzugt mit Carbonaten oder Hydroxide wie Kaliumcarbonat und Natriumhydroxid ausgehärtet werden.

Gut geeignete Härter für organisches Isocyanat mit mindestens zwei Isocyanatgruppen, beispielsweise PMDI, können in vier Gruppen unterteilt werden: Amine, weitere Basen, Metallsalze und Organometallverbindungen, bevorzugt sind Amine. Derartige Härter sind beispielsweise in Michael Szycher, Szycher's Handbook of Polyurethanes, CRC Press, 1999, Seiten 10-1 bis 10-20 beschrieben.

Ferner geeignet sind Verbindungen, die die Reaktion von reaktiven Wasserstoffatomen, insbesondere Hydroxylgruppen, enthaltenden Verbindungen mit den organischen Isocyanaten stark beschleunigen.

Zweckmäßigerweise verwendet man als Härter basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin.

Als Metallsalze eignen sich Salze von Metallen wie Eisen(II)-chlorid, Zinkchlorid, Bleioctoat und vorzugsweise Zinnsalze wie Zinndioctoat.

Als Organometallverbindungen eignen sich Organometallsalze wie Zinndioctoat, Zinndiethylhexoat und Dibutylzinndilaurat sowie insbesondere Mischungen aus tertiären Aminen und organischen Zinnsalzen.

Als weitere Basen eignen sich Amidine, wie 2,3-Dimethyl-3,4,5,6-tetrahydropyrimidin, Tetraalkyl-ammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Weitere Beispiele von Härtern für Aminoplastharze finden sich in M. Dunky, P. Niemz, Holzwerkstoffe und Leime, Springer 2002, Seiten 265 bis 269, solche Härter für Phenolformaldehydharze finden sich in M. Dunky, P. Niemz, Holzwerkstoffe und Leime, Springer 2002, Seiten 341 bis 352 und solche Härter für organische Isocyanate mit mindestens 2 Isocyanatgruppen finden sich in M. Dunky, P. Niemz, Holzwerkstoffe und Leime, Springer 2002, Seiten 385 bis 391.

Komponente C

Komponente C) sind expandierte Kunststoffteilchen, welche gegebenenfalls mit einem Bindemittel beschichtet sind.

Expandierte Kunststoffteilchen, vorzugsweise expandierte thermoplastische Kunststoffteilchen, werden aus expandierbaren Kunststoffteilchen, vorzugsweise expandierbaren thermoplastische Kunststoffteilchen, hergestellt. Beide basieren auf bzw. bestehen aus Polymeren, vorzugsweise thermoplastischen Polymeren, die sich verschäumen lassen. Diese sind dem Fachmann bekannt.

Gut geeignete derartige Polymere sind beispielsweise Polyketone, Polysulfone, Polyoxymethylen, PVC (hart und weich), Polycarbonate, Polyisocyanurate, Polycarbodiimide, Polyacrylimide und Polymethacrylimide, Polyamide, Polyurethane, Aminoplastharze und Phenolharze, Styrolhomopolymere (im Folgenden auch als "Polystyrol" oder "Styrolpolymerisat" bezeichnet), Styrolcopolymere, $C_2$-$C_{10}$-Olefinhomopolymere, $C_2$-$C_{10}$-Olefincopolymere, Polyester oder deren Gemische, bevorzugt PVC (hart und weich), Polyurethane, Styrolhomopolymerisat, Styrolcopolymerisat oder deren Gemische, besonders bevorzugt Styrolhomopolymerisat, Styrolcopolymerisat oder deren Gemische, insbesondere Styrolhomopolymerisat, Styrolcopolymerisat oder deren Gemische.

Die oben beschriebenen bevorzugten oder besonders bevorzugten expandierbaren Styrolpolymerisaten oder expandierbaren Styrolcopolymerisate haben einen relativ geringen Gehalt an Treibmittel. Derartige Polymerisate werden auch als "treibmittelarm" bezeichnet. Ein gut geeignetes Verfahren zu Herstellung von treibmittelarmen expandierbarem Polystyrol oder expandierbarem Styrolcopolymerisat wird in US-A-5,112,875 beschrieben auf das hierin ausdrücklich Bezug genommen wird.

Wie beschrieben, können auch Styrolcopolymerisate eingesetzt werden. Vorteilhaft weisen diese Styrolcopolymerisate mindestens 50 Gew.-%, vorzugsweise mindestens 80 Gew.-% einpolymerisiertes Styrol auf. Als Comonomere kommen z. B. $\alpha$-Methylstyrol, kernhalogenierte Styrole, Acrylnitril, Ester der Acryl- oder Methacrylsäure von Alkoholen mit 1 bis 8 C-Atomen, N-Vinylcarbazol, Maleinsäure(anhydrid), (Meth)acrylamide und/oder Vinylacetat in Betracht.

Vorteilhaft kann das Polystyrol und/oder Styrolcopolymerisat eine geringe Menge eines Kettenverzweigers einpolymerisiert enthalten, d. h. einer Verbindung mit mehr als einer, vorzugsweise zwei Doppelbindungen, wie Divinylbenzol, Butadien und/oder Butandioldiacrylat. Der Verzweiger wird im Allgemeinen in Mengen von 0,0005 bis 0,5 Mol-%, bezogen auf Styrol, verwendet.

Auch Mischungen verschiedener Styrol(co)polymerisate können verwendet werden.

Gut geeignete Styrolhomopolymerisate oder Styrolcopolymerisate sind glasklares Polystyrol (GPPS), Schlagzähpolystyrol (HIPS), anionisch polymerisiertes Polystyrol oder Schlagzähpolystyrol (A-IPS), Styrol-$\alpha$-Methylstyrol-copolymere, Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS)-Polymerisate oder Mischungen davon oder mit Polyphenylenether (PPE) eingesetzt.

Bevorzugt werden Styrolpolymerisate, Styrolcopolymerisate oder Styrolhomopolymerisate mit einem Molekulargewicht im Bereich von 70.000 bis 400.000 g/mol, besonders bevorzugt 190.000 bis 400.000 g/mol, ganz besonders bevorzugt 210.000 bis 400.000 g/mol eingesetzt.

Derartiges Polystyrol und/oder Styrolcopolymerisat kann nach allen den Fachmann bekannten Polymerisierungsverfahren hergestellt werden, siehe z. B. Ullmann's Encyclopedia, Sixth Edition, 2000 Electronic Release oder Kunststoff-Handbuch 1996, Band 4 "Polystyrol", Seiten 567 bis 598.

Bestehen die expandierten Kunststoffteilchen aus unterschiedlichen Polymertypen, also Polymertypen, denen unterschiedliche Monomere zugrunde liegen, beispielsweise Polystyrol und Polyethylen oder Polystyrol und Homo-Polypropylen oder Polyethylen und Homo-Polypropylen, so können diese in unterschiedlichen Gewichtsverhältnissen vorliegen, die allerdings unkritisch sind.

Die expandierten Kunststoffteilchen werden im Allgemeinen in Form von Kugeln oder Perlen mit einem mittleren Durchmesser von 0,25 bis 10 mm, bevorzugt 0,4 bis 8,5 mm, besonders bevorzugt 0,4 bis 7 mm, insbesondere im Bereich von 1,2 bis 7 mm eingesetzt und weisen vorteilhaft eine kleine Oberfläche pro Volumen auf, beispielsweise in Form eines sphärischen oder elliptischen Partikels.

Die expandierten Kunststoffteilchen sind vorteilhaft geschlossenzellig. Die Offenzelligkeit nach DIN-ISO 4590 beträgt in der Regel weniger als 30 %.

Die expandierten Kunststoffteilchen weisen eine Schüttdichte, von 10 bis 150 kg/m$^3$ auf, bevorzugt 30 bis 100 kg/m$^3$, besonders bevorzugt 40 bis 80 kg/m$^3$, insbesondere 50 bis 70 kg/m$^3$. Die Schüttdichte wird üblicherweise durch Wiegen eines mit dem Schüttgut gefüllten definierten Volumens ermittelt.

Die expandierten Kunststoffteilchen haben in der Regel, wenn überhaupt, nur noch einen geringen Gehalt an Treibmittel. Der Gehalt an Treibmittel im expandierten Kunststoffteilchen liegt im Allgemeinen im Bereich von 0 bis 5,5 Gew.-%, vorzugsweise 0 bis 3 Gew.-%, bevorzugt 0 bis 2,5 Gew.-%, besonders bevorzugt 0 bis 2 Gew.-%, jeweils bezogen auf das expandierte Polystyrol oder expandierte Styrolcopolymerisat. 0 Gew.-% bedeutet hierin, dass kein Treibmittel mit den üblichen Nachweisverfahren nachgewiesen werden kann.

Diese expandierten Kunststoffteilchen können ohne oder mit, bevorzugt ohne weitere Maßnahmen zur Treibmittelverminderung und besonders bevorzugt ohne weitere Zwischenschritte zur Herstellung des lignocellulosehaltigen Stoffs weiterverwendet werden.

Üblicherweise weist das expandierbare Polystyrol oder expandierbare Styrolcopoly-merisat oder das expandierte Polystyrol oder expandierte Styrolcopolymerisat eine antistatische Beschichtung auf.

Die expandierten Kunststoffteilchen können wie folgt erhalten werden:

Kompakte expandierbare Kunststoffteilchen, üblicherweise Feststoffe die in der Regel keine Zellstruktur besitzen, welche ein ausdehnungsfähiges Medium (auch "Treibmittel" genannt) enthalten, werden durch Einwirkung von Wärme oder Druckänderung expandiert (oft auch als "aufschäumen" bezeichnet). Hierbei dehnt sich das Treibmittel aus, die Partikel nehmen an Größe zu und Zellstrukturen entstehen.

Dieses Expandieren wird im Allgemeinen in üblichen Aufschäumvorrichtungen, oft als "Vorschäumer" bezeichnet, durchgeführt. Derartige Vorschäumer können ortsfest installiert oder aber mobil sein.

Die Expandierung kann einstufig oder mehrstufig durchgeführt werden. In der Regel werden beim einstufigen Verfahren die expandierbaren Kunststoffteilchen ohne weiteres auf die gewünschte Endgröße expandiert.

In der Regel werden beim mehrstufigen Verfahren die expandierbaren Kunststoffteilchen zunächst auf eine Zwischengröße expandiert und dann in einer oder mehreren weiteren Stufen über entsprechend viele Zwischengrößen zur gewünschten Endgröße expandiert.

Vorzugsweise wird die Expandierung einstufig durchgeführt.

Für die Herstellung von expandiertem Polystyrol als Komponente C) und/oder expandiertem Styrolcopolymerisat als Komponente C) werden im Allgemeinen die expandierbaren Styrolhomopolymerisate oder expandierbaren Styrolcopolymerisate in bekannter Weise durch Erhitzen auf Temperaturen oberhalb ihres Erweichungspunkts, beispielsweise mit Heißluft oder vorzugsweise Dampf und oder Druckänderung expandiert (oft auch als "aufgeschäumt" bezeichnet), wie zum Beispiel in Kunststoff Handbuch 1996, Band 4 "Polystyrol", Hanser 1996, Seiten 640 bis 673 oder US-A-5,112,875 beschrieben. Das expandierbare Polystyrol oder expandierbare Styrolcopolymerisat ist in der Regel in an sich bekannter Weise durch Suspensionspolymerisation oder mittels Extrusionsverfahren wie oben beschrieben erhältlich. Beim Expandieren dehnt sich das Treibmittel aus, die Polymerpartikel nehmen an Größe zu und Zellstrukturen entstehen.
Die Herstellung des expandierbaren Polystyrols und/oder Styrolcopolymerisats erfolgt in der Regel in an sich bekannter Weise durch Suspensionspolymerisation oder mittels Extrusionsverfahren.

Bei der Suspensionspolymerisation wird Styrol, gegebenenfalls unter Zusatz weiterer Comonomere in wässriger Suspension in Gegenwart eines üblichen Suspensionsstabilisators mittels radikalbildender Katalysatoren polymerisiert. Das Treibmittel und gegebenenfalls weitere Zusatzstoffe können dabei bei der Polymerisation mit vorgelegt werden oder im Laufe der Polymerisation oder nach beendeter Polymerisation dem Ansatz zugefügt werden. Die erhaltenen perlförmigen, mit Treibmittel imprägnierten, expandierbaren Styrolpolymerisate werden nach beendeter Polymerisation von der wässrigen Phase abgetrennt, gewaschen, getrocknet und gesiebt.

Bei dem Extrusionsverfahren wird das Treibmittel beispielsweise über einen Extruder in das Polymer eingemischt, durch eine Düsenplatte gefördert und unter Druck zu Partikeln oder Strängen granuliert.

Die so erhaltenen expandierten Kunststoffteilchen bzw. die beschichteten expandierten Kunststoffteilchen können zwischengelagert und transportiert werden.

Als Treibmittel eignen sich alle dem Fachmann bekannten Treibmittel, beispielsweise aliphatische $C_3$- bis $C_{10}$-Kohlenwasserstoffe wie Propan, n-Butan, Isobutan, n-Pentan, Isopentan, Neopentan, Cyclopentan und/oder Hexan und dessen Isomere, Alkohole, Ketone, Ester, Ether, halogenierte Kohlenwasserstoffe oder deren Gemische, bevorzugt n-Pentan, Isopentan, Neopentan, Cyclopentan oder deren Gemisch, besonders bevorzugt handelsübliche Pentanisomerengemische aus n-Pentan und iso-Pentan.

Der Gehalt an Treibmittel im expandierbaren Kunststoffteilchen liegt im allgemeinen im Bereich von 0,01 bis 7 Gew.-%, vorzugsweise 0,01 bis 4 Gew.-%, bevorzugt 0,1 bis 4 Gew.-%, besonders bevorzugt 0,5 bis 3,5 Gew.-%, jeweils bezogen auf das treibmittelhaltige expandierbare Polystyrol oder Styrolcopolymerisat.

Beschichtung der Komponente C

Als Beschichtungsmittel für die expandierbaren bzw. expandierten Kunststoffteilchen eignen sich alle Verbindungen der Komponenten C und C sowie Verbindungen K, die eine klebrige Schicht bilden, oder deren Gemische, bevorzugt alle Verbindungen der Komponente B sowie Verbindungen K, die eine klebrige Schicht bilden, besonders bevorzugt alle Verbindungen der Komponente B. Für den Fall, dass das Beschichtungsmittel aus den Komponenten C* ausgewählt wurde, können Beschichtungsmittel und Komponente B im Lignocellulosewerkstoff gleich oder verschieden, bevorzugt gleich sein.

Als Verbindungen K, die eine klebrige Schicht bilden, eignen sich Polymere auf Basis von Monomeren wie vinylaromatischen Monomeren, wie $\alpha$-Methylstyrol, p-Methylstyrol, Ethylstyrol, tert.- Butylstyrol, Vinylstyrol, Vinyltoluol, 1,2-Diphenylethylen, 1,1-Diphenylethylen, Alkenen, wie Ethylen oder Propylen, Dienen, wie 1,3-Butadien, 1,3-Pentadien, 1,3-Hexadien, 2,3-Dimethylbutadien, Isopren, Piperylen oder Isopren, $\alpha$-$\beta$-ungesättigte Carbonsäuren, wie Acrylsäure und Methacrylsäure, deren Estern, insbesondere Alkylester, wie $C_1$- bis $C_{10}$-Alkylester der Acrylsaeure, insbesondere die Butylester, vorzugsweise n-Butylacrylat, und die $C_1$- bis $C_{10}$-Alkylester der Methacrylsäure, insbesondere Methylmethacrylat (MMA), oder Carbonsäureamide, beispielsweise Acrylsäureamid und Methacrylsäureamid. Diese Polymere können gegebenenfalls 1 bis 5 Gew.- % Comonomere, wie (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, Methylolacrylamid oder das Natriumsalz der Vinylsulfonsäure enthalten. Bevorzugt sind diese Polymere aus einem oder mehreren der Monomeren Styrol, Butadien, Acrylsäure, Methacrylsäure, $C_1$- bis $C_4$-Alkylacrylaten, $C_1$- bis $C_4$-Alkylmethacrylaten, Acrylsäureamid, Methacrylsäureamid und Methylolacrylsäureamid aufgebaut. Des Weiteren eignen sich insbesondere Acrylatharze, besonders bevorzugt in Form der wässrigen Polymerdispersion, sowie Homooligomere oder Homopolymere von $\alpha$-$\beta$-ungesättigten Carbonsäuren oder deren Anhydriden sowie Co-Oligomere oder Co-Polymere von $\alpha$-$\beta$-ungesättigten Carbonsäuren und/oder deren Anhydriden mit ethylenisch ungesättigten Co-Monomeren.

Geeignete Polymerdispersionen sind beispielsweise durch radikalische Emulsionspolymerisation von ethylenisch ungesättigten Monomeren, wie Styrol, Acylate, Methacrylate oder deren Gemisch, wie in WO-A-00/50480 beschrieben, erhältlich, bevorzugt reine Acrylate oder Styrol-Acrylate, welche aus den Monomeren Styrol, n-Butylacrylat, Methylmetharcylat (MMA), Methacrylsaeure, Acrylamid oder Methylolacrylamid, aufgebaut sind.

Die Herstellung der Polymerdispersion oder -suspension kann in an sich bekannter Weise, etwa durch Emulsions-, Suspensions-, oder Dispersionspolymerisation, bevorzugt in wässriger Phase, erfolgen. Man kann das Polymer auch durch Lösungs- oder Massepolymerisation herstellen, gegebenenfalls Zerteilen und die Polymerpartikel anschließend in Wasser in üblicher Weise dispergieren.

Das Beschichtungsmittel kann mit dem expandierbaren Kunststoffteilchen ("Variante I") oder mit dem expandierten Kunststoffteilchen in Berührung gebracht. ("Variante II"); vorzugsweise wird Variante (II) verwendet.

Der erfindungsgemäße beschichtete Kunststoffteilchen können beispielsweise dadurch hergestellt werden, dass man

a) Kunststoffteilchen, bevorzugt nicht expandierbare Kunststoffteilchen, aufschmilzt, ein oder mehreren Beschichtungsmitteln und Treibmittel in beliebiger Reihenfolge zugibt, möglichst homogen vermischt und zu Schaumstoffpartikeln aufschäumt,

b) expandierbare Kunststoffteilchen, mit ein oder mehreren Beschichtungsmitteln beschichtet und zu Schaumstoffpartikeln aufschäumt oder

c) expandierbare Kunststoffteilchen während oder nach dem Vorschäumen mit ein oder mehreren Beschichtungsmitteln beschichtet.

Weiterhin kann das in Berührung bringen mit den üblichen Verfahren geschehen, beispielsweise durch Besprühen, Tauchen, Benetzen oder Auftrommeln der expandierbaren bzw. expandierten Kunststoffteilchen mit dem Beschichtungsmittel bei einer Temperatur von 0 bis 150°C, bevorzugt 10 bis 120°C, besonders bevorzugt 15 bis 110°C und einem Druck von 0,01 bis 10 bar, bevorzugt 0,1 bis 5 bar, besonders bevorzugt bei Normaldruck (Atmosphärendruck); bevorzugt wird das Beschichtungsmittel im sogenannten Vorschäumer unter den zuvor genannten Bedingungen zugesetzt.

Komponente D

Als Komponente D) eignet sich mikrofibrillierte Cellulose, die auch als Mikrocellulose, (Cellulose) Mikrofibrillen, nanofibrillierte Cellulose, Nanocellulose oder (Cellulose) Nanofibrillen bezeichnet wird (Cellulose 2010, 17, 459; Seite 460, rechte Spalte).

Unter mikrofibrillierter Cellulose versteht man eine Cellulose, die defibrilliert wurde. Das bedeutet, dass die einzelnen Mikrofibrillen der cellulosehaltigen Fasern teilweise oder komplett voneinander getrennt wurden. Die mikrofibrillierte Cellulose hat eine mittlere Faserlänge von 0,1 bis 1500 $\mu$m, bevorzugt von 1 bis 1500 $\mu$m, besonders bevorzugt von 500 bis 1300 $\mu$m und mindestens 15 Gew.-% der Fasern sind kürzer als 200 $\mu$m.

Die mikrofibrillierten Cellulosen weisen in der Regel eine BET-Oberfläche von 10 bis 500 $m^2/g$, bevorzugt 20 bis 100 $m^2/g$, besonders bevorzugt 30 bis 75 $m^2/g$ auf.

Die mikrofibrillierten Cellulosen weisen in der Regel eine Entwässerungsfähigkeit von ≥60 SR, bevorzugt von ≥75 SR, besonders bevorzugt von ≥80 SR auf.

Die mittlere Faserlänge ist das Gewichtsmittel der Faserlängen (Lw) bestimmt nach der Tappi Norm T271 (Lit.: Tappi Journal, 45 (1962), No. 1, Seiten 38 bis 45. Der Anteil an Fasern, die eine bestimmte Länge nicht überschreiten werden ebenfalls nach der Tappi Norm T271 bestimmt.

Die BET-Oberfläche der mikrofibrillierten Cellulose kann nach folgender Methode bestimmt werden:

Eine wässrige Formulierung der mikrofibrillieren Cellulose (Suspension, Gel) wird auf einer Fritte platziert und mit tert.-Butanol gewaschen. Die erhaltene tert.-Butanol Suspension der mikrofibrillierten Cellulose wird von der Fritte auf eine gekühlte Metallplatte (ca. 0°C) mit Glasdeckel (Lyophilisator, Gefriertrockner) aufgebracht. Die Probe wird im unter Kühlung über Nacht getrocknet. Tert.-Butanol sublimiert langsam und hinterlässt die strukturierte mikrofibrillierte Cellulose gefriergetrocknet. Bei der erhaltenen, schwammartigen, festen mikrofibrillierten Cellulose wird durch Physisorption von Stickstoff (Messung in einem Oberflächen BET Messgerät (Micromeritics ASAP2420); die Stickstoffbeladung wird gegen den Stickstoff Partialdruck aufgetragen und mit der BET Theorie ausgewertet) die Oberfläche ermittelt.

Die SR - Werte werden nach der Schopper-Riegler Methode wie in der ISO 5267-1 bestimmt.

Cellulose ist an sich bekannt und/oder lässt sich nach an sich bekannten Verfahren herstellen.

Mikrofibrillierte Cellulose lässt sich aus handelsüblicher Cellulose oder aus Cellulosen für die Papierindustrie herstellen.

Mikrofibrillierte Cellulose kann auf mehrere Weisen hergestellt werden:

a) Extrudieren von Cellulosefasern in einem Doppelschneckenextruder wie in WO-A-2010/149711 oder WO-A-2011/055148 beschrieben,

b) Extrudieren von Cellulosefasern gemeinsam mit Prozeß- bzw. Modifikationschemikalien wie in WO-A-2011/051882 beschrieben,

c) Homogenisieren einer Suspension aus Cellulosefasern indem man diese Suspension unter hohem Druck durch eine Düse presst wie in EP-A-51230 oder EP-A-402866, Beispiel 1, beschrieben,

d) Zermahlen cellulosehaltiger Fasern, u.a. in einem Refiner wie in US-B-6,379,594 beschrieben,

e) Allgemeine mechanische Zerkleinerung wie in EP-A-726356 beschrieben.

Bevorzugt wird die mikrofibrillierte Cellulose nach Methode a), b), d), e), besonder bevorzugt nach Methode a), b), d), insbesondere nach Methode a), b) hergestellt.

Als Cellulose eignen sich neue als auch wiederaufbereitete Cellulosen oder deren Gemische, insbesondere neue als auch wiederaufbereitete Cellulosefasern oder deren Gemische. Es kommen sämtliche dafür gängigen Typen, z.B. Cellulosefasern aus Holzstoff und allen ein- und mehrjährigen Pflanzen gewonnenen Fasern, in Betracht. Zu Holzstoff gehören beispielsweise Schliff, wie Holzschliff oder Druckschliff, thermomechanischer Holzstoff (thermomechanical pulp = TMP), chemo-thermomechanischer Holzstoff (chemithermomechanical pulp = CTMP), Halbzellstoff, Hochausbeutezellstoff und Refiner Mechanical Pulp (RMP), sowie Altpapier; alle aus mechanischer Herstellung. Außerdem eignen sich Zellstoffe, die in gebleichter oder ungebleichter Form verwendet werden können. Beispiele hierfür sind Sulfat-, Sulfit-, Soda- und Natronzellstoff; alle aus chemischer Herstellung. Unter den Zellstoffen verwendet man vorzugsweise gebleichte Zellstoffe, die auch als gebleichter Kraftzellstoff bezeichnet werden. Die genannten Stoffe bzw. Faserstoffe können allein oder in Mischung verwendet werden. Die Cellulose kann so, wie sie bei den vorgenannten Herstellprozessen anfällt ohne oder mit Nachreinigung, bevorzugt ohne Nachreinigung bzw. so wie sie bei der Papierherstellung vorliegt, verwendet werden.

Als Grundstoff für Cellulose, im Speziellen Holzstoff und Zellstoff eignen sich cellulosehaltige, faseraufweisende Rohstoffe wie beispielsweise Cellulose, Rohfasern, ganze Pflanzen, die Fasern enthaltend, oder Fasern enthaltende Pflanzenbestandteile wie Stängel, sowie ein- und mehrjährigen Pflanzen, Hölzer aller Art wie Weichholz- oder Hartholz, also Hölzer jeder beliebige Holzart wie Laub- oder Nadelhölzer, u.a. aus Industrieresthholz oder Plantagenholz, beispielsweise Eukalyptus-, Fichten-, Buchen-, Kiefern-, Lärchen-, Linden-, Pappel-, Eschen-, Kastanien-, Tannenholz oder deren Gemische, bevorzugt Eukalyptus-, Fichten-, Buchen-, Kiefern-, Lärchen-, Linden-, Pappel-, Eschen-, Kastanien-, Tannenholz oder deren Gemische, besonders bevorzugt Eukalyptus-, Fichten-, Buchenholz oder deren Gemische, insbesondere Eukalyptus-, Fichtenholz oder deren Gemische, sowie Papier, Pappe, Karton, Altpapier, Altpappe und Altkarton.

Als einjährige Pflanzen eignen sich Hanf, Flachs, Schilf, Baumwolle, Weizen, Gerste, Roggen, Hafer, Zuckerrohr (Bagasse), Maisstängel, Sonnenblumenstängel, Sisal oder Kenaf. Weiterhin können faserhaltige Agrarabfälle wie Maisstängel oder Sonnenblumenstängel als Rohstoffe verwendet werden. Zur Herstellung von Fasermaterial aus Agrarabfällen eignen sich Getreidespreu wie Hafer- oder Reisspreu und Getreide-Stroh z.B. von Weizen, Gerste, Roggen oder Hafer. Als mehrjährige Pflanzen eignen sich Hölzer aller Art, also Hölzer jeder beliebigen Holzart wie zuvor beschrieben.

Unter dem Begriff Pulpe versteht man in diesem Zusammenhang die nach den mechanischen oder chemischen Verfahren erhältliche breiartige Masse (Maische), mit einem Feststoffgehalt von 0 bis 80 Gew.-%, bevorzugt 0,1 bis 60 Gew.-%, besonders bevorzugt 0,5 bis 50 Gew.-%, die aus der Zerkleinerung der zuvor genannten Rohstoffe stammen.

Pulpen können auch ausgehend von Abfall- und Altpapier, alleine oder in Mischungen mit anderen faserhaltigen Materialien hergestellt werden. Das dafür verwendete Altpapier kann dabei aus einem De-Inking Prozess oder aus einer Old-Corrugated Container Pulpe (OCC) stammen. Es können auch Mischungen aus Alt- und Neumaterial verwendet werden.

Bevorzugte cellulosehaltige Fasern enthalten gebleichte chemische Pulpen, bevorzugt gebleichte Kraft-Pulpen, bevorzugt Weichholz Kraft Pulpen und/oder Altpapier.

Die als Rohstoff verwendeten cellulosehaltigen Fasern können vor der Verwendung vorbehandelt werden. Solche Vorbehandlungen können das Entfernen toxischer oder unerwünschter Stoffe, Zerkleinern, Hämmern, Mahlen, Pinnen oder Waschen des Materials sein oder aber Kombinationen davon.

Erfindungsgemäß werden die cellulosehaltigen Fasern als Startmaterial als wässrige Mischung mechanischer Scherung unterworfen. Der Feststoffgehalt der Fasermischung beträgt in der Regel 10 bis 100 Gew.-%, normalerweise jedoch 10 bis 90 Gew.-%, bevorzugt 30 bis 70 Gew.-%, besonders bevorzugt 40 bis 60 Gew.-%, insbesondere 50 bis 60 Gew.-%.

Die Komponente D) kann thermostabile Biozide enthalten. Bevorzugte thermostabile Biozide sind ausgewählt aus der Gruppe der 2H-Isothiazol-3-on Derivate, Glutaraldehyd, Pyrithion und seine Derivate und Benzalkoniumchlorid. Beispiele für 2H-Isothiazol-3-on Derivate sind Methylisothiazolinon, Chlormethylisothiazolinon, Octylisothiazolinon und Benzisothiazolinon. Beispiele für Pyrithion Derivate sind Natriumpyrithion und Dipyrithion. Besonders bevorzugte thermostabile Biozide werden ausgewählt aus der Gruppe Methylisothiazolinon, Chlormethylisothiazolinon, Octylisothiazolinon und Benzisothiazolinon, Glutaraldehyd, Natriumpyrithion und Benzalkoniumchlorid.

Komponente E)

Die erfindungsgemäßen Lignocellulosewerkstoffe können mit -dem Fachmann bekannten und handelsüblichen- Dekorpapieren als Komponente E in Mengen von 0,06 bis 10 Gew.-%, bevorzugt 0,1 bis 5 Gew.-%, besonders bevorzugt 0,5 bis 3 Gew.-% beschichtet werden.

Dekorpapiere sind in der Regel unifarbene, durchgefärbte Papiere, die mit wässrigen Druckfarben bedruckt sein können, in der Regel mit einem Flächengewicht von 20 bis 250 $g/m^2$, bevorzugt 50 $g/m^2$ bis 100 $g/m^2$ (welche auf die dem Fachmann bekannte Art und Weise mit wässrigen Aminoharzlösungen imprägniert werden können. Nach der Trocknung haben die hergestellten Imprägnate in der Regel Flächengewichte von 30 bis 500$g/m^2$, bevorzugt 80 bis 250$g/m^2$.

Komponente F)

Die erfindungsgemäßen Lignocellulosewerkstoffe können mit -dem Fachmann bekannten und handelsüblichen- Dekorlacke als Komponente F in Mengen von 0,05 bis 5 Gew.-%, bevorzugt 0,1 bis 5 Gew.-%, besonders bevorzugt 0,5 bis 3 Gew.-% lackiert werden.

Übliche Dekorlacke sind in der Regel wasserbasierte Mischungen z.B. aus teilveretherten (meist methanolisch veretherten) Melaminharzen und hydroxylgruppenfunktionalisierten Acrylatdispersionen mit einem Feststoffanteil zwischen 45 bis 85 Gew.-% (Feststoffanteil bestimmt durch Differenzwägung nach einer Trockenzeit von 2 Stunden bei 120°C). Nach erfolgter Applikation des Lackes durch Walzenauftrag und anschließender Trocknung bei bis zu 200°C beträgt die Masse des aufgetragenen Lackes in der Regel 2 bis 100$g/m^2$, bevorzugt 3 bis 50 $g/m^2$.

Komponente G)

Die erfindungsgemäßen Lignocellulosewerkstoffe können dem Fachmann bekannte und handelsübliche Additive als Komponente E in Mengen von 0 bis 50 Gew.-%, bevorzugt 0 bis 10 Gew.-%, besonders bevorzugt 0,5 bis 8 Gew.-%, insbesondere 1 bis 3 Gew.-% enthalten.

Als Additive eignen sich beispielsweise Hydrophobierungsmittel wie Paraffin-Emulsionen, Pilzschutzmittel, Formaldehydfänger, wie Harnstoff oder Polyamine, und Flammschutzmittel, Streckmittel, Füllmittel. Weitere Beispiele von Additiven finden sich in M. Dunky, P. Niemz, Holzwerkstoffe und Leime, Springer 2002, Seiten 436 bis 444.

Mengen der Komponenten im Lignocellulosewerkstoff

Die Gesamtmenge des Bindemittels B), bezogen auf die lignocellulosehaltigen Stoffe, liegt in der Regel im Bereich von 1 bis 50 Gew.-%, bevorzugt 2 bis 15 Gew.-%, besonders bevorzugt 3 bis 10 Gew.-%, wobei die Menge

a) des Phenolformaldehydharzes bezogen auf die lignocellulosehaltigen Stoffe in der Regel im Bereich von 0 bis 50 Gew.-%, bevorzugt 4 bis 20 Gew.-%, besonders bevorzugt 5 bis 15 Gew.-%,
b) des Aminoplastharzes (als Feststoff gerechnet bezogen auf die lignocellulosehaltigen Stoffe in der Regel im Bereich von 0 bis 45 Gew.-%, bevorzugt 4 bis 20 Gew.-%, besonders bevorzugt 5 bis 15 Gew.-% und
c) des organischen Isocyanats bezogen auf die lignocellulosehaltigen Stoffe in der Regel im Bereich von 0 bis 7 Gew.-%, vorzugsweise 0,1 bis 5 Gew.-%, besonders bevorzugt 0,5 bis 4 Gew.-% liegt.

Die Gesamtmenge des Beschichtungsmittels auf den expandierten Kunststoffteilchen C) {bezogen auf die Menge der nicht beschichteten Kunststoffteilchen} liegt im Bereich von 0 bis 20 Gew.-%, bevorzugt 0 bis 15 Gew.-%, besonders bevorzugt 0 bis 10 Gew.-%.

Die gegebenenfalls beschichteten, expandierten Kunststoffteilchen C) liegen in der Regel auch nach dem Verpressen zum Lignocellulosewerkstoff, vorzugsweise Holzwerkstoff, vorzugsweise mehrschichtigen Lignocellulosewerkstoff, besonders bevorzugt mehrschichtigen Holzwerkstoff, in einem praktisch ungeschmolzenen Zustand vor. Das bedeutet, dass die Kunststoffteilchen C) in der Regel nicht in die Lignocellulose-Teilchen eingedrungen sind oder diese imprägniert haben, sondern zwischen den Lignocellulose-Teilchen verteilt sind. Üblicherweise lassen sich die Kunststoffteilchen C) mit physikalischen Verfahren, zum Beispiel nach dem Zerkleinern des Lignocellulosewerkstoffs, von der Lignocellulose abtrennen.

Die Gesamtmenge der beschichteten, expandierten Kunststoffteilchen C), bezogen auf den lignocellulosehaltigen, vorzugsweise holzhaltigen Stoff, liegt im Bereich von 0 bis 25 Gew.-%, vorzugsweise 0 bis 20 Gew.-%, besonders bevorzugt 0 bis 15 Gew.-%.

Die Gesamtmenge der Trockenmasse der mikrofibrillierten Cellulose, bezogen auf die Trockenmasse der lignocellulosehaltigen Stoffe, liegt in der Regel zwischen 0 bis 50 Gew.-%, bevorzugt zwischen 0 und 40 Gew.-%, besonders bevorzugt zwischen 0,01 und 30 Gew.-%.

Herstellverfahren:

Die erfindungsgemäßen Lignocellulosewerkstoffe können nach an sich bekannten Verfahren zur Herstellung von Spanplatten bzw. Herstellung von Faserplatten (MDF und/oder HDF) (siehe zum Beispiel: M. Dunky, P. Niemz, Holzwerkstoffe und Leime, Seite 91 bis 156, Springer Verlag Heidelberg, 2002 hergestellt werden.

In einer bevorzugten Ausführungsform können die standardmäßig hergestellten Span-bzw. Faserplattenmit imprägnierten, dekorativen Papieren durch Verpressen unter Druck und Temperatur laminiert werden.

In einer weiteren bevorzugten Ausführungsform können die standardmäßig hergestellten Span-bzw. Faserplatten mit den üblichen, dem Fachmann bekannten Verfahren lackiert werden.

Mehrschichtverfahren

Die vorliegende Erfindung betrifft weiterhin ein Verfahren zur Herstellung eines ein- oder mehrschichtigen Lignocellulosewerkstoffes der mindestens drei Schichten enthält, wobei entweder nur die mittlere Schicht oder mindes-tens ein Teil der mittleren Schichten einen lignocellulosehaltigen Stoff wie oben definiert enthält oder außer der mittlere Schicht oder mindestens einem Teil der mittleren Schichten mindestens eine weitere Schicht einen lignocellulosehaltigen Stoff wie oben definiert enthält, wobei man die Komponenten für die einzelnen Schichten übereinanderschichtet und unter erhöhter Temperatur und erhöhtem Druck verpreßt.

Die mittlere Dichte des erfindungsgemäßen mehrschichtigen, vorzugsweise des erfindungsgemäßen dreischichtigen, Lignocellulosewerkstoffs, vorzugsweise Holzwerkstoffs ist in der Regel nicht kritisch.

Üblicherweise haben höherdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von mindestens 600 bis 900 kg/m$^3$, bevorzugt 600 bis 850 kg/m$^3$, besonders bevorzugt 600 bis 800 kg/m$^3$.

Üblicherweise haben niedrigdichte erfindungsgemäße mehrschichtige, vorzugsweise erfindungsgemäße dreischichtige, Lignocellulosewerkstoffe, vorzugsweise Holzwerkstoffe eine mittlere Dichte im Bereich von 200 bis 600 kg/m$^3$, bevorzugt 300 bis 600 kg/m$^3$, besonders bevorzugt 350 bis 500 kg/m$^3$.

Bevorzugte Parameterbereiche sowie bevorzugte Ausführungsformen im Hinblick auf die mittlere Dichte des lignocellulosehaltigen, vorzugsweise holzhaltigen Stoffs und im Hinblick auf die Komponenten sowie deren Herstellungsverfahren A), B),C), D), E), F) und G) sowie die Kombination der Merkmale entsprechen den oben beschriebenen.

Mittlere Schichten im Sinne der Erfindung sind alle Schichten, die nicht die äußeren Schichten sind.

Die mikrofibrillierte Cellulose kann erfindungsgemäß auf verschieden Wege aufgebracht werden:

a) Aufsprühen einer flüssigen MFC-Formulierung (Lösung, Dispersion, Suspension) auf die Holzspäne/-fasern oder
b) Mischen der festen, bevorzugt pulverförmigen MFC mit den Holzspänen/-fasern oder
c) Herstellen einer flüssig oder festen MFC-Bindemittelmischung und Aufbringen bzw. Mischen dieser auf die / mit den Holzspänen/-fasern oder
d) Zugabe von MFC vor oder während der Herstellung der Holzspäne/-fasern im Zerspaner oder Refiner

Methode a)

Das Aufsprühen einer flüssigen MFC Formulierung auf Holzspäne/-fasern kann vor oder nach dem Aufbringen des Bindemittels B) geschehen. Als Lösemittel dient Wasser, bevorzugt Leitungswasser, deionisiertes Wasser, entsalztes Wasser oder destilliertes Wasser. Die Konzentration der MFC in der wässrigen Formulierung wird so gewählt, dass sie noch problemlos auf die Holzspäne aufgesprüht werden kann und sich die MFC gleichmäßig über die Späne verteilt.
Der Feststoffgehalt der MFC-Formulierung liegt dabei zwischen 0,01 und 20 %, bevorzugt zwischen 0,05 und 15 %, besonders bevorzugt zwischen 0,1 und 10 %.

Methode b)

Die Zugabe der festen MFC zu den Holzspänen/-fasern kann vor oder nach dem Aufbringen des Bindemittels B) erfolgen. Die dabei verwendete MFC sollte pulverförmig und rieselfähig sein. Die Menge an MFC bezogen auf die Menge an Holzspänen /-fasern liegt zwischen 0,01 und 50 Gew.-%, bevorzugt zwischen 0,1 und 30 Gew.-%, besonders bevorzugt zwischen 0,1 und 15 Gew.-%.

Methode c)

Die MFC wird im Bindemittel B) einformuliert, so dass

i) eine weiterhin flüssige MFC-Bindemittel entsteht
ii) das Bindemittel B) vollständig von den MFC aufgesogen wird und eine feste Formulierung entsteht.

Bei der Herstellung der weiterhin flüssigen MFC-Formulierung i) muss darauf geachtet werden, dass die Konzentration an MFC in der Formulierung so gewählt wird, dass diese noch problemlos auf die Holzspäne/-fasern aufgesprüht werden kann. Die Menge an MFC bezogen auf den Feststoffgehalt des Bindemittels liegt bevorzugt zwischen 0,001 und 20 Gew.-%, besonders bevorzugt zwischen 0,01 und 10 Gew.-%, besonders bevorzugt zwischen 0,1 und 5 Gew.-%. Bei der Herstellung der festen Formulierung ii) wird die MFC mit gerade so viel Bindemittel B) versetzt, dass der entstehende Feststoff gerade noch pulverförmig und rieselfähig ist.

Methode d)

Die MFC wird bevorzugt als Granulat bei der Herstellung der Holzspäne/-fasern zugegeben. Bevorzugt wird die MFC bei der Herstellung der Holzspäne im oder vor dem Zerspaner bzw. bei der Herstellung der Holzfasern im oder vor dem Refiner zu den Hackschnitzeln gegeben. Die Menge an MFC bezogen auf die Menge an Holzspänen /-fasern liegt zwischen 0,01 und 50 Gew.-%, bevorzugt zwischen 0,1 und 30 Gew.-%, besonders bevorzugt zwischen 0,5 und 15 Gew.-%.
Bevorzugt enthält der erfindungsgemäße mehrschichtige Lignocellulosewerkstoff, vorzugsweise mehrschichtige Holzwerkstoff drei Lignocelluloseschichten, vorzugsweise Holzstoffschichten, wobei die äußeren Deckschichten in Summe in der Regel dünner sind als die innere(n) Schicht(en).
Das für die äußeren Schichten verwendete Bindemittel ist üblicherweise ein Amino-plastharz, beispielsweise Harnstoff-Formaldehydharz (UF), Melamin-Formaldehydharz (MF), Melamin-Harnstoff-Formaldehydharz (MUF) oder das erfindungsgemäße Bindemittel B). Vorzugsweise ist das für die äußeren Schichten verwendete Bindemittel ein Aminoplastharz, besonders bevorzugt ein Harnstoff-Formaldehydharz, ganz besonders bevorzugt ein Aminoplastharz worin das molare Formaldehyd zu -NH$_2$-Gruppen-Verhältnis im Bereich von 0,3:1 bis 3:1 liegt.
In einer bevorzugten Ausführungsform enthalten die äußeren Schichten (üblicherweise "Deckschicht(en)" genannt) keine expandierten Kunststoffteilchen C).
Die Dicke des erfindungsgemäßen mehrschichtigen Lignocellulosewerkstoffs, vorzugsweise mehrschichtigen Holzwerkstoffs variiert mit dem Anwendungsgebiet und liegt in der Regel im Bereich von 0,5 bis 100 mm, vorzugsweise im Bereich von 10 bis 40 mm, insbesondere 12 bis 40 mm.
Die Verfahren zur Herstellung von mehrschichtigen Holzwerkstoffen sind im Prinzip bekannt und zum Beispiel in M. Dunky, P. Niemz, Holzwerkstoffe und Leime, Springer 2002, Seiten 91 bis 150 beschrieben.

Ein Beispiel für ein Verfahren zur Herstellung eines erfindungsgemäßen mehrschichtigen Holzwerkstoffs wird im Folgenden beschrieben.

Gegebenenfalls wird Komponente C zunächst aus expandierbaren Kunststoffteilchen aufgeschäumt und gegebenenfalls mit Beschichtungsmittel beschichtet.

Nach der Zerspanung des Holzes werden die Späne getrocknet. Danach werden gegebenenfalls Grob- und Feinanteile entfernt. Die verbleibenden Späne werden durch Sieben oder Sichten im Luftstrom sortiert. Das gröbere Material wird für die Mittelschicht, das feinere für die Deckschichten eingesetzt.

Die Deckschichtspäne werden getrennt von den Mittelschichtspänen mit Komponente D) als 2,5 Gew.-% wässrigen Suspension, Komponente B), Härter, bevorzugt werden diese Härter kurz vor der Verwendung der Komponente B zugesetzt, und gegebenenfalls Komponente E beleimt, beziehungsweise vermischt. Diese Mischung wird nachfolgend als Deckschichtmaterial bezeichnet.

Die Mittelschichtspäne werden getrennt von den Deckschichtspänen mit der Komponente D) als 2,5 Gew.-% wässrigen Suspension, gegebenenfalls mit der gegebenenfalls beschichteten Komponente C), Komponente B), Härter, bevorzugt werden diese Härter kurz vor der Verwendung der Komponente B) zugesetzt, und gegebenenfalls Komponente E beleimt, beziehungsweise vermischt. Diese Mischung wird anschließend als Mittelschichtmaterial bezeichnet.

Anschließend werden die Späne gestreut.

Zunächst wird das Deckschichtmaterial auf das Formband gestreut, anschließend das Mittelschichtmaterial - enthaltend die beschichtete Komponenten C), B) und gegebenenfalls C) und G) -und schließlich noch einmal Deckschichtmaterial. Das Deckschichtmaterial wird dabei so geteilt, dass beide Deckschichten in etwa gleich viel Material enthalten. Der so erzeugte dreischichtige Spänekuchen wird kalt (in der Regel bei Raumtemperatur) vorverdichtet und anschließend heiß gepresst.

Das Verpressen kann nach allen dem Fachmann bekannten Verfahren erfolgen. Üblicherweise wird der Holzpartikelkuchen bei einer Press-Temperatur von 150 bis 230°C auf die gewünschte Dicke gepresst. Die Pressdauer beträgt normalerweise 3 bis 15 Sekunden pro mm Plattendicke. Man erhält eine dreischichtige Spanplatte.

Die mechanische Festigkeit kann durch die Messung der Querzugsfestigkeit nach EN 319 bestimmt werden.

Die Zugabe der mikrofibrillierten Cellulose zu den Holzspänen/-fasern bewirkt eine Verbesserung der Querzugsfestigkeit und erlaubt die Herstellung von Lignocellulosewerkstoffen mit reduzierter Gesamtmenge an Bindemittel. Weiterhin können leichte Lignocellulosewerkstoffe hergestellt werden.

Lignocellulosewerkstoffe, insbesondere mehrschichtige Holzwerkstoffe, sind eine kostengünstige und Ressourcen schonende Alternative zu Massivholz und haben große Bedeutung und werden verwendet zur Herstellung von Gegenständen aller Art und im Baubereich, insbesondere zur Herstellung von Möbeln und Möbelteilen (im Möbelbau), von Verpackungsmaterialien, von Laminatfußböden und als Baumaterialien, im Hausbau oder im Innenausbau oder in Kraftfahrzeugen.

Die mikrofibrillierte Cellulose eignet sich zur Herstellung lignocellulosehaltiger Formkörper (Verwendung).

Komponente H)

Markierung

Zur Markierung verwendet man die mindestens einen Fluoreszenzfarbstoff enthaltenden wässrigen Polymerdispersionen oder die daraus gewonnenen Pulver mindestens in solchen Mengen, dass die Fluoreszenzfarbstoffe in den markierten Materialien nachweisbar sind.

Für die Markierung von Lignocellulosewerkstoffen verwendet man 0,0003 bis 3 Gew.-%, vorzugsweise 0,003 bis 3 Gew.-% mindestens eines Typs polymerer Dispersionspartikeln, die mindestens einen Fluoreszenzfarbstoff enthalten, bezogen auf den Lignocellulosewerkstoff.

Wird lediglich die Oberfläche oder einer der Oberflächen oder der Kanten des Lignocellulosewerkstoffes markiert, so können deutlich geringere Mengen mindestens eines Typs polymerer Dispersionspartikeln, die mindestens einen Fluoreszenzfarbstoff enthalten, verwendet werden, vorzugsweise 0,000001 bis 0,01 Gew%, besonders bevorzugt 0,00001 bis 0,001 Gew%.

Der Erfindung liegt die Aufgabe zugrunde, wässrige Dispersionen von Polymeren, die einen Teilchendurchmesser im Bereich von 0,05 bis 50 $\mu$m, bevorzugt 0,5 bis 20 $\mu$m, besonders bevorzugt 1 bis 10 $\mu$m und die einen Fluoreszenzfarbstoff enthalten, mit einer möglichst einheitlichen Teilchengrößenverteilung zur Verfügung zu stellen.

Die wässrigen Dispersionen sind erhältlich durch radikalische Suspensionspolymerisation von ethylenisch ungesättigten Monomeren in einer Öl-in-Wasser-Emulsion, in Gegenwart mindestens einer oberflächenaktiven Verbindung und mindestens 0,5 Gew.-%, bezogen auf die Monomeren, mindestens einer hydrophoben, nichtpolymerisierbaren, organischen Verbindung, eines hydrophoben Polymeren aus mindestens einem $C_2$-bis $C_6$-Olefin mit einer Molmasse $M_W$ bis zu 10.000, eines Siloxans mit einer Molmasse $M_W$ bis zu 5.000 und/oder Polystyrol mit einer Molmasse $M_W$ bis zu 10.000.

Die Synthese der in Wasser dispergierten Polymerteilchen kann durch Suspensionspolymerisation erfolgen. Dabei wird außer den Monomeren, mindestens einem Fluoreszenzfarbstoff und einer oberflächenaktiven Verbindung zusätzlich ein in Wasser nur sehr wenig lösliches Cosolvenz für den Fluoreszenzfarbstoff als Hydrophob eingesetzt. Die Wasserlöslichkeit des Hydrophobs beträgt beispielsweise <0,1 g/l, vorzugsweise <0,01 g/l (bei 25°C und 1013 mbar). Man kann sämtliche hydrophobe Verbindungen einsetzen, die üblicherweise bei der Miniemulsionspolymerisation verwendet werden, vgl. WO-A-99/40123, Seite 7, Zeile 27 bis Seite 8, Zeile 20. Im Unterschied zur Herstellung einer Miniemulsion wird jedoch bei der Emulgierung der mindestens einen Fluoreszenzfarbstoff enthaltenden Lösung aus wenigstens Monomeren und einem Hydrophob in Wasser nicht so stark geschert, so dass man eine Öl-in-Wasser-Emulsion mit einer mittleren Teilchengröße von mindestens 1 $\mu$m erhält. Die mittlere Teilchengröße der Öl-in-Wasser-Emulsion liegt damit deutlich über der bei Miniemulsionen üblichen Teilchengröße. Aus den emulgierten Monomertröpfchen entstehen die dispergierten Polymerteilchen, die den Fluoreszenzfarbstoff gleichmäßig verteilt enthalten. Dieses Verfahren kann man auch als Mini-Suspensionspolymerisation bezeichnen.

Man erhält wässrige Dispersionen von Polymeren, die mindestens einen Fluoreszenzfarbstoff enthalten, eine mittlere Teilchengröße in dem Bereich von 1 bis 100 $\mu$m haben und die eine engere Teilchengrößenverteilung aufweisen als die Polymerdispersionen, die unter Ausschluss von hydrophoben Verbindungen hergestellt werden, vgl. EP-B-0 692 517.

Als ethylenisch ungesättigte Monomere kommen beispielsweise

(a) hydrophobe Monomere aus der Gruppe $C_1$-bis $C_{18}$-Alkylester der Acrylsäure, $C_1$- bis $C_{18}$-Alkylester der Methacrylsäure, Vinylacetat, Vinylpropionat, Vinylbutyrat, Styrol, Chlorstyrol und/oder $\alpha$-Methylstyrol,
(b) gegebenenfalls hydrophile Monomere aus der Gruppe ethylenisch ungesättigten $C_3$- bis $C_6$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$- bis $C_8$-Hydroxialkylester von $C_1$- bis $C_6$-Carbonsäuren, Di-$C_1$-bis $C_3$-alkylamino-$C_2$- bis $C_4$-alkylacrylate, Di-$C_1$- bis $C_3$-alkylamino-$C_2$- bis $C_4$-alkylmethacrylate, Acrylamid, Methacrylamid, N-Vinylformamid und/oder N-Vinylpyrrolidon und
(c) gegebenenfalls mindestens ein vernetzend wirkendes Monomer mit mindestens zwei Doppelbindungen im Molekül

in Betracht.

Die Monomeren der Gruppe (a) können allein, in Mischung untereinander sowie in Kombination mit den Monomeren (b) und/oder (c) bei der Suspensionspoylmerisation eingesetzt werden. Beispiele für Monomere der Gruppe (a) sind Methylacrylat, Ethylacrylat, Isopropylacrylat, n-Propylacrylat, n-Butylacrylat, Isobutylacrylat, tert.-Butylacrylat, sek.-Butylacrylat, Pentylacrylat, n-Hexylacrylat, Octylacrylat, 2-Ethylhexylacrylat, Decylacrylat, Dodecylacrylat, Palmitylacrylat, Stearylacrylat, Methylmethacrylat, Ethylmethacrylat, Isopropylmethacrylat, n-Propylmethacrylat, n-Butylmethacrylat, Isobutylmethacrylat, sek.-Butylmethacrylat, tert.-Butylmethacrylat, Pentylmethacrylat, n-Hexylmethacrylat, Cyclohexylmetharylat, Heptylmethacrylat, 2-Ethylhexylmethacrylat, Octylmethacrylat, Decylmethacrylat, Dodecylmethacrylat, Palmitylmethacrylat und Stearylmethacrylat sowie Vinylacetat, Vinylpropionat, Vinylbutyrat, Styrol, Chlorstyrol und/oder $\alpha$-Methylstyrol. Bevorzugt eingesetzte Monomere dieser Gruppe sind Methylmethacrylat und Styrol.

Monomere der Gruppe (b), die gegebenenfalls zur hydrophilen Modifizierung der Polymeren eingesetzt werden, sind beispielsweise ausgewählt aus der Gruppe der ethylenisch ungesättigten $C_3$- bis $C_6$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$- bis $C_8$-Hydroxialkylester von $C_1$- bis $C_6$-Carbonsäuren, Di-$C_1$- bis $C_3$-alkylamino-$C_2$- bis $C_4$-alkylacrylate, Di-$C_1$- bis $C_3$-alkylamino-$C_2$- bis $C_4$-alkylmethacrylate, Acrylamid, Methacrylamid, N-Vinylformamid und/oder N-Vinylpyrrolidon.

Beispiele für ethylenisch ungesättigte Carbonsäuren sind Acrylsäure, Methacrylsäure, Crotonsäure, Maleinsäure, Fumarsäure, Itaconsäure und Vinylessigsäure. Die ethylenisch ungesättigten Carbonsäuren sowie die Sulfogruppen enthaltenden Monomeren können in Form der freien Säuren sowie in partiell oder vollständig mit Alkalimetall-, Erdalkalimetallbasen, Ammoniak oder Aminen neutralisierter Form bei der Polymerisation eingesetzt werden. Meistens setzt man die Natrium-, Kalium- oder Ammoniumsalze der sauren Monomeren ein. Die sauren Monomeren können jedoch auch mit Aminen wie Butylamin, Morpholin, Ethanolamin, Diethanolamin oder Triethanolamin neutralisiert und in partiell oder vollständig neutralisierter Form bei der Polymerisation eingesetzt werden. Von den Hydroxialkylestern kommen insbesondere 2-Hydroxyethylacrylat, 2-Hydroxyethylmethacrylat, Hydroxypropylacrylat, Hydroxybutylacrylat und 2-Hydroxypropylmethacrylat in Betracht.

Beispiele für basische Monomere sind Dimethylaminoethylacrylat, Dimethylaminoethylmethacrylat, Dimethylaminopropylacrylat, Dimethylaminopropylmethacrylat, Diethylaminoethylacrylat, Diethylaminoethylmethacrylat, Di-n-Propylaminoethylacrylat und Di-n-Propylaminoethylmethacrylat. Die basischen Monomeren können als freie Base, als Salz mit Mineralsäuren, gesättigten Carbonsäuren oder Sulfonsäuren wie p-Toluolsulfonsäure oder Benzolsulfonsäure sowie in quaternierter Form (z.B. quaterniert mit Methylchlorid, Ethylchlorid, n-Propylchlorid, Dimethylsulfat, n-Hexylchlorid, Cyclohexylchlorid oder Benzylchlorid) bei der Polymerisation verwendet werden.

Die Monomeren der Gruppe (b) können einzeln oder in Kombination bei der Polymerisation eingesetzt werden. Vorzugsweise verwendet man aus dieser Gruppe Acrylsäure, Methacrylsäure, Acrylamid, Methacrylamid, Vinylformamid und N-Vinylpyrrolidon.

Als Monomere der Gruppe (c) setzt man vernetzend wirkende Monomere mit mindestens zwei Doppelbindungen im Molekül ein. Beispiele für solche Monomere sind Ester aus mehrwertigen Alkoholen und ethylenisch ungesättigten Carbonsäuren wie Acrylsäure oder Methacrylsäure z.B. Ethylenglykoldiacrylat, Ethylenglykoldimethacrylat, Butandioldiacrylat, Butandioldimethacrylat, Hexandioldiacrylat, Hexandioldimethacrylat, Acrylate und Methacrylate von Polyalkylenglykolen wie Polyethylenglykolen, Polypropylenglykolen oder Blockcopolymeren aus Ethylenoxid und Propylenoxid mit Molmassen von beispielsweise 100 bis 5000, Allylacrylat, Allylmethacrylat, Trimethylolpropantriacrylat, Trimethylolpropantrimethacrylat, Pentaerythrittriacrylat, Pentaerythrittrimethacrylat, Pentaerythrittetraacrylat, Pentaerythrittetramethacrylat, Divinylbenzol, Divinylharnstoff und Methylenbisacrylamid. Bevorzugt kommen Allylmethacrylat, Butandiol-1,4-diacrylat und Trimethylolpropantriacrylat als Vernetzer in Betracht.

Die bei der Polymerisation eingesetzten Monomergemische enthalten beispielsweise

(a) 60 bis 100 Gew.-% mindestens eines hydrophoben Monomeren,
(b) 0 bis 30 Gew.-% mindestens eines hydrophilen Monomeren und
(c) 0 bis 40 Gew.-% mindestens eines vernetzend wirkenden Monomeren mit mindestens zwei Doppelbindungen.

Vorzugsweise setzt man bei der Polymerisation Monomergemische ein, die

(a) 60 bis 99,9 Gew.-% mindestens eines hydrophoben Monomeren,
(b) 0 bis 30 Gew.-% mindestens eines hydrophilen Monomeren und
(c) 0,1 bis 25 Gew.-%, insbesondere 5 bis 15 Gew.-% mindestens eines vernetzend wirkenden Monomeren

enthalten.

Fluoreszenzfarbstoffe sind dem Fachmann bekannt. Sie werden beispielsweise in der zum Stand der Technik genannten WO-A-99/40123, Seite 10, Zeile 14 bis Seite 25, Zeile 25 und in der EP-B-0 692 517, Seite 3, Zeile 7 bis Seite 6, Zeile 1, beschrieben. Geeignete Fluoreszenzfarbstoffe gehören beispielsweise zu der Klasse der Cumarin-, Perylen-, Terrylen-, Quaterrylen-, Naphthalimid-, Cyanin-, Xanthen-, Oxazin-, Anthracen-, Naphthacen-, Anthrachinon- oder Thiazin-Farbstoffe, wobei einzelne Farbstoffe als auch Mischungen von beispielsweise bis zu 12 (also 2 bis 12), bevorzugt bis zu 8 (also 2 bis 8), besonders bevorzugt bis zu 5 (also 2 bis 5) verschiedenen Farbstoffen verwendet werden können. Durch Abmischung verschiedener Farbstoffe sind eine große Zahl individueller Farbcodierungen zugänglich. Vorzugsweise werden solche Fluoreszenzfarbstoffe verwendet, die eine höhere Löslichkeit in der Ölphase als in der wässrigen Phase der Öl-in-Wasser-Emulsion haben. Beispielsweise sollten die Farbstoffe eine Löslichkeit von wenigstens 0,001 Gew.-%, vorzugsweise von wenigstens 0,01 Gew.-% in der Ölphase haben.

Um wässrige Dispersionen von feinteiligen Polymeren herzustellen, die einen Fluoreszenzfarbstoff enthalten und einen mittleren Teilchendurchmesser von mindestens 1 $\mu$m haben, kann man beispielsweise so vorgehen, dass man zunächst mindestens einen Fluoreszenzfarbstoff in einer Mischung aus mindestens einem der in Betracht kommenden Monomeren und mindestens einer hydrophoben Verbindung löst und diese Lösung dann in einer wässrigen Phase emulgiert, die mindestens eine oberflächenaktive Verbindung enthält. Das Emulgieren der Ölphase in die wässrige Phase kann beispielsweise mit Hilfe eines schnelllaufenden Rührers oder mit Hilfe von Vorrichtungen durchgeführt werden, die nach dem Rotor-Stator-Prinzip arbeiten wie Ultra-Turrax®. Man erhält Öl-in-Wasser-Emulsionen mit einer mittleren Teilchengröße der Öltröpfchen von mindestens 1 bis 100 $\mu$m, vorzugsweise 1,1 bis 25 $\mu$m.

Ein wesentlicher Bestandteil der erfindungsgemäßen wässrigen Dispersionen von Polymeren, die mindestens einen Fluoreszenzfarbstoff enthalten, ist ein Hydrophob. Beispiele dafür sind hydrophobe, nichtpolymerisierbare, organische Verbindungen, hydrophobe Polymere aus mindestens einem $C_2$-bis $C_6$-Olefin mit einer Molmasse $M_w$ bis zu 10.000, Siloxane mit einer Molmasse $M_w$ bis zu 5.000 und/oder Polystyrole mit einer Molmasse $M_w$ bis zu 10.000. Unter hydrophoben, nichtpolymerisierbaren, organischen Verbindungen sollen alle Verbindungen verstanden werden, die beispielsweise eine Löslichkeit in Wasser von <0,01 g/l (bei 25°C und 1013 mbar) aufweisen. Beispiele hierfür sind aliphatische oder aromatische Kohlenwasserstoffe mit 10 bis 50 C-Atomen, bevorzugt mit 10 bis 24 C-Atomen, Alkohole mit 10 bis 24 C-Atomen, Tetraalkylsilane, Olivenöl, Perfluormethyldekalin und/oder Di-n-butylester von $C_4$- bis $C_6$-Dicarbonsäuren. Besonders bevorzugt eingesetzte hydrophobe Verbindung aus dieser Gruppe sind Hexadekan und flüssige Paraffine, wie das technische oder medizinische Weißöl. Ein solches Weißöl ist beispielsweise unter der CAS-Nr. 8042-47-5 erhältlich. Dabei handelt es sich um ein Erdöl-Mineralöl als komplexe Kombination von gesättigten Kohlenwasserstoffen mit Kohlenstoffzahlen im Bereich von $C_{15}$ bis $C_{50}$. Man kann auch Mischungen von hydrophoben, nichtpolymerisierbaren organischen Verbindungen einsetzten, beispielsweise Gemische von Hexadekan und Weißöl. Es wird - wie auch die anderen hydrophoben Verbindungen - beispielsweise in einer Menge von 0,5 bis 50 Gew.-%, bevorzugt in einer Menge von 1 bis 20 Gew.-%, bezogen auf die Monomeren, eingesetzt.

Als Hydrophob kommen weiterhin Homopolymerisate mindestens eines $C_2$- bis $C_6$-Olefins oder Copolymerisate aus $C_2$- bis $C_6$-Olefinen mit einer Molmasse $M_w$ bis zu 10.000 in Betracht. Polymere dieser Art sind beispielsweise

(i) Homopolymerisate aus Ethylen, Propylen, Buten-1, Buten-2, Penten-1 oder Hexen-1 mit einer mittleren Molmasse $M_w$ von 100 bis 1.000,
(ii) Copolymerisate aus mindestens zwei der unter (i) genannten Monomeren mit einer mittleren Molmasse $M_w$ von 100 bis 1000 und/oder
(iii) Polyisobutylen mit einer mittleren Molmasse $M_w$ von mindestens 100.

Beispiele für Polymere der Gruppe (i) sind niedrigmolekulare Homopolymerisate von Ethylen, Propylen, Buten-1, Penten-1 und Hexen-1. Es handelt sich hierbei z.B. um Oligomere des Ethylens wie insbesondere 8 oder 12 Kohlenstoffatome pro Molekül enthaltende Polymere, die beispielsweise von der Firma Shell unter der Marke Neodene® und von der Firma BP als alpha-Olefin z.B. AO 2026 sowie von der Firma Chevron-Phillips Corporation angeboten werden. Als Verbindung (i) kommt außerdem das von der Firma Exxon-Mobil angebotene Tetramer-Propen und das von der Firma Oxeno vertriebene Tetra-Buten in Betracht. Die Verbindungen (i) enthalten eine Doppelbindung. Sie haben beispielsweise eine mittlere Molmasse $M_w$ von 100 bis 10.000, vorzugsweise 150 bis 2.000.

Beispiele für Verbindungen (ii) sind Copolymerisate aus Ethylen und Propylen, Copolymerisate aus Ethylen und Buten-1, Copolymerisate aus Ethylen und Buten-2, Copolymerisate aus Ethylen und Hexen-1, Copolymerisate aus Propylen und Buten-1 und Copolymerisate aus Propylen, Buten-1 und Buten-2 sowie weitere Kombinationen. Diese Copolymerisate enthalten ebenfalls noch eine ethylenisch ungesättigte Doppelbindung. Sie haben beispielsweise mittlere Molmassen $M_w$ von 100 bis 10.000, vorzugsweise 150 bis 2.000.

Als Verbindungen der Gruppe (iii) kommen Polyisobutylene in Betracht. Sie haben beispielsweise eine mittlere Molmasse $M_w$ von mindestens 100, vorzugsweise mindestens 150. Die mittleren Molmassen $M_w$ liegen z. B. in dem Bereich von 200 bis 10.000. Meistens beträgt die mittlere Molmasse $M_w$ der in Betracht kommenden Polyisobutylene mindestens 400 und liegt vorzugsweise in dem Bereich von 500 bis 4.000.

Geeignete Polyisobutylene sind im Handel erhältlich. Beispiele hierfür sind die Glissopal® Marken und Oppanol® Marken der BASF Aktiengesellschaft, wie Glissopal® 550, Glissopal® 1000, Glissopal® 1300, Glissopal® 2300, Oppanol B10 und B12. Polyisobutylen wird z.B. durch kationische Polymerisation von Isobuten unter $BF_3$-Katalyse hergestellt. Diese Polyisobutylene weisen einen hohen Gehalt an $\alpha$-Olefin-Gruppen auf, der beispielsweise mindestens 80 %, vorzugsweise mindestens 85 % beträgt. Sie können auch durch sog. "lebende" Polymerisation mit von $BF_3$ verschiedenen Lewis-Säuren wie $AlY_3$, $TiY_4$, $SnY_4$ und $ZnY_2$ hergestellt werden, wobei in den vorangehenden Formeln der Substituent Y für Fluor, Chlor, Brom oder Jod steht. Polyisobutylene mit einem Gehalt an $\alpha$-Olefin-Gruppen von mindestens 80 % werden bevorzugt eingesetzt. Weitere Beispiele für erfindungsgemäß als (iii) einzusetzende Verbindungen sind die von der Firma BP unter dem Namen Indopol® angebotenen Polyisobutylene mit den Bezeichnungen L2-L-50 sowie H-7 bis H-18 000, die eine Molmasse in dem Bereich von 180 bis 6.000 haben. Diese Polyisobutylene enthalten ebenfalls $\alpha$-Olefin-Gruppen, jedoch nur bis zu ca. 10 %.

Je nach Polymerisationsverfahren liegt der Polydispersitätsindex (PDI) für diese Polymeren, d.h. das Verhältnis aus gewichtsmittlerem und zahlenmittlerem Molekulargewicht in dem Bereich von 1,05 bis 10, bevorzugt in dem Bereich von 1,05 bis 5 und insbesondere in dem Bereich von 1,05 bis 2. Die Bestimmungsmethode der Polydispersität (PDI) sowie des zahlen- und gewichtsmittleren Molekulargewichts ist beispielsweise im Analytiker-Taschenbuch, Band 4, Seiten 433 bis 442, Berlin 1984, beschrieben.

Bevorzugt eingesetzte hydrophobe Verbindungen aus diesen Gruppen sind beispielsweise (i) Tetramer-Propen und tetrameres Buten, (ii) Copolymerisate aus Ethylen und Propylen, Copolymerisate aus Ethylen und Buten-1, Copolymerisate aus Ethylen und Buten-2, Copolymerisate aus Ethylen und Hexen-1, Copolymerisate aus Propylen und Buten-1 und Copolymerisate aus Propylen, Buten-1 und Buten-2 mit einer Molmasse von jeweils 150 bis 2.000 und/oder (iii) Polyisobutylene mit einer Molmasse in dem Bereich von 200 bis 10.000.

Weitere geeignete Hydrophobe sind Siloxane mit einer Molmasse $M_w$ bis zu 5.000 und/oder Polystyrole mit einer Molmasse $M_w$ bis zu 10.000.

Um die Öl-in-Wasser-Emulsion zu stabilisieren, verwendet man üblicherweise mindestens eine oberflächenaktive Verbindung. Das oberflächenaktive Mittel wird beispielsweise in Mengen bis zu 15 Gew.-%, beispielsweise von 0,05 bis 15 Gew.-%, vorzugsweise von 0,05 bis 5 Gew.-% und insbesondere von 0,1 bis 2 Gew.-%, jeweils bezogen auf die gesamte Dispersion, eingesetzt. Man findet es entweder in der wässrigen Phase, der organischen Phase oder in beiden Phasen. Es wird vorzugsweise vor dem Emulgieren zur wässrigen Phase zugegeben. Man kann prinzipiell alle oberflächenaktiven Mittel verwenden. Bevorzugt eingesetzte oberflächenaktive Mittel sind anionische und/oder nichtionische Tenside sowie amphiphile Polymerisate mit mittleren Molmassen $M_w$ von beispielsweise 1.000 bis 100.000. Beispiele für geeignete oberflächenaktive Mittel sind Natriumlaurylsulfat, Natriumdodecylsulfat, Natriumhexadecylsulfat, Natriumdioctylsulfosuccinat und/oder Additionsprodukte von 15 bis 50 Mol Ethylenoxid und/oder Propylenoxid an 1 Mol

eines $C_{12}$- bis $C_{22}$-Alkohols.

Die Öl-in-Wasser-Emulsion kann zusätzlich auch mit Hilfe von amphiphilen Polymeren stabilisiert werden, die gegebenenfalls eingesetzt werden. Sofern man amphiphile Polymere verwendet, setzt man sie in Mengen von beispielsweise 0,05 bis 15 Gew.-%, vorzugsweise 0,5 bis 5 Gew.-%, bezogen auf die bei der Polymerisation eingesetzten Monomeren ein. Beispiele für amphiphile Polymere sind Copolymerisate, die Einheiten von

(i) hydrophoben monoethylenisch ungesättigten Monomeren und
(ii) monoethylenisch ungesättigten Carbonsäuren, monoethylenisch ungesättigten Sulfonsäuren, monoethylenisch ungesättigten Phosphonsäuren oder deren Mischungen und/oder basischen Monomeren

enthalten.

Geeignete hydrophobe monoethylenisch ungesättigte Monomere

(i) sind beispielsweise Styrol, Methylstyrol, Ethylstyrol, Acrylnitril, Methacrylnitril, $C_2$- bis $C_{18}$-Olefine, Ester aus monoethylenisch ungesättigten $C_3$- bis $C_5$-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Die amphiphilen Copolymerisate enthalten als hydrophile Monomere

(ii) vorzugsweise Acrylsäure, Methacrylsäure, Maleinsäure, Maleinsäureanhydrid, Itaconsäure, Vinylsulfonsäure, 2-Acrylamidomethylpropansulfonsäure, Acrylamido-propan-3-sulfonsäure, 3-Sulfopropylacrylat, 3-Sulfopropylmethacrylat, Styrolsulfonsäure, Vinylphosphonsäure oder deren Mischungen in einpolymerisierter Form. Die sauren Monomeren können in Form der freien Säuren oder in partiell oder vollständig neutralisierter Form vorliegen.

Weitere geeignete hydrophile Monomere sind basische Monomere. Sie können mit den hydrophoben Monomeren (i) allein oder auch in Mischung mit den vorstehend genannten sauren Monomeren polymerisiert werden. Wenn man Mischungen aus basischen und sauren Monomeren einsetzt, entstehen amphotere Copolymerisate, die je nach Molverhältnis der jeweils einpolymerisierten sauren zu basischen Monomeren anionisch oder kationisch geladen sind.

Basische Monomere sind beispielsweise Di-$C_1$-bis $C_2$-alkylamino-$C_2$-bis $C_4$-alkyl-(meth)acrylate oder Diallyldimethylammoniumchlorid. Die basischen Monomeren können in Form der freien Basen, der Salze mit organischen oder anorganischen Säuren oder in der mit Alkylhalogeniden quaternierten Form vorliegen. Die Salzbildung bzw. die Quaternierung, bei der die basischen Monomeren kationisch werden, kann teilweise oder vollständig erfolgt sein. Beispiele für solche Verbindungen sind Dimethylaminoethylmethacrylat, Diethylaminoethylmethacrylat, Dimethylaminoethylacrylat, Diethylaminoethylacrylat, Dimethylaminopropylmethacrylat, Dimethylaminopropylacrylat, Diethylaminopropylmethacrylat, Diethylaminopropylacrylat und/oder Dimethylaminoethylacrylamid, Dimethylaminoethylmethacrylamid, Dimethylaminopropylacrylamid, Dimethylaminopropylmethacrylamid und/oder Diallyldimethylammoniumchlorid.

Sofern die amphiphilen Copolymerisate in Form der freien Säure nicht ausreichend wasserlöslich sind, werden sie in Form von wasserlöslichen Salzen eingesetzt, z.B. verwendet man die entsprechenden Alkalimetall-, Erdalkalimetall- und Ammoniumsalze. Diese Salze werden beispielsweise durch partielle oder vollständige Neutralisation der freien Säuregruppen der amphiphilen Copolymerisate mit Basen hergestellt, z.B. verwendet man zur Neutralisation Natronlauge, Kalilauge, Magnesiumoxid, Ammoniak oder Amine wie Triethanolamin, Ethanolamin, Morpholin, Triethylamin oder Butylamin. Vorzugsweise werden die Säuregruppen der amphiphilen Copolymerisate mit Ammoniak oder Natronlauge neutralisiert. Die Wasserlöslichkeit von basischen Monomeren bzw. von Copolymerisaten, die solche Monomere einpolymerisiert enthalten, kann dagegen durch partielle oder vollständige Neutralisation mit einer Mineralsäure wie Salzsäure oder Schwefelsäure oder durch Zusatz einer organischen Säure wie Essigsäure oder p-Toluolsulfonsäure, erhöht werden. Die Molmasse der amphiphilen Copolymerisate beträgt beispielsweise 1.000 bis 100.000 und liegt vorzugsweise in dem Bereich von 1.500 bis 10.000. Die Säurezahlen der amphiphilen Copolymerisate betragen beispielsweise 50 bis 500, vorzugsweise 150 bis 350 mg KOH/g Polymer.

Besonders bevorzugt sind solche amphiphilen Copolymerisate, die

(i) 95 bis 45 Gew.-% Isobuten, Diisobuten, Styrol oder deren Mischungen und
(ii) 5 bis 55 Gew.-% Acrylsäure, Methacrylsäure, Maleinsäure, Halbester von Maleinsäure oder deren Mischungen

einpolymerisiert enthalten. Besonders bevorzugt werden Copolymerisate als Stabilisator für die Miniemulsion eingesetzt, die

(i) 45 bis 80 Gew.-% Styrol,

(ii) 55 bis 20 Gew.-% Acrylsäure und gegebenenfalls

(iii) zusätzlich weitere Monomere

einpolymerisiert enthalten. Die Copolymerisate können gegebenenfalls als weitere Monomere (iii) Einheiten von Maleinsäurehalbestern einpolymerisiert enthalten. Solche Copolymerisate sind beispielsweise dadurch erhältlich, daß man Copolymerisate aus Styrol, Diisobuten oder Isobuten oder deren Mischungen mit Maleinsäureanhydrid in Abwesenheit von Wasser copolymerisiert und die Copolymerisate im Anschluß an die Polymerisation mit Alkoholen umsetzt, wobei man pro Mol Anhydridgruppen im Copolymerisat 5 bis 50 Mol-% eines einwertigen Alkohols einsetzt. Geeignete Alkohole sind beispielsweise Methanol, Ethanol, n-Propanol, Isopropanol, n-Butanol, Isobutanol und tert.-Butanol. Man kann jedoch auch die Anhydridgruppen der Copolymerisate mit mehrwertigen Alkoholen wie Glykol oder Glycerin umsetzen. Hierbei wird die Reaktion jedoch nur soweit geführt, daß nur eine OH-Gruppe des mehrwertigen Alkohols mit der Anhydridgruppe reagiert. Sofern die Anhydridgruppen der Copolymerisate nicht vollständig mit Alkoholen umgesetzt werden, erfolgt die Ringöffnung der nicht mit Alkoholen umgesetzten Anhydridgruppen durch Zugabe von Wasser.

Andere als Stabilisator für Öl-in-Wasser-Emulsionen geeignete Verbindungen sind beispielsweise handelsübliche Polymerisate von monoethylenisch ungesättigten Säuren sowie Pfropfpolymerisate von N-Vinylformamid auf Polyalkylenglykolen, die beispielsweise in der WO-A-96/34903 beschrieben werden. Die aufgepfropften Vinylformamideinheiten können gegebenenfalls hydrolysiert sein, beispielsweise bis zu 10 %. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2.000 bis 10.000.

Außerdem kommen zur Stabilisierung der Öl-in-Wasser-Emulsionen zwitterionische Polyalkylenpolyamine und zwitterionische Polyethylenimine in Betracht. Solche Verbindungen sind beispielsweise aus der EP-B-0 112 592 bekannt. Sie sind beispielsweise dadurch erhältlich, daß man ein Polyalkylenpolyamin oder Polyethylenimin zunächst alkoxyliert, z.B. mit Ethylenoxid, Propylenoxid und/oder Butylenoxid und die Alkoxylierungsprodukte anschließend quaternisiert, z.B. mit Methylbromid oder Dimethylsulfat und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1.000 bis 9.000, vorzugsweise 1.500 bis 7.500. Die zwitterionischen Polyethylenimine haben vorzugsweise Molmassen in dem Bereich von 1.500 bis 7.500 Dalton. Die anderen, oben genannten Stabilisatoren werden gegebenenfalls in Kombination mit einem oberflächenaktiven Mittel zur Stabilisierung der Emulsionen angewendet. Falls sie eingesetzt werden, verwendet man sie beispielsweise in Mengen von 0,05 bis 15 Gew.-%, vorzugsweise 0,5 bis 5 Gew.-%, bezogen auf die Monomeren.

Um stabile wässrige Polymerdispersionen zu erhalten, kann man die Polymerisation bevorzugt in Gegenwart von Schutzkolloiden durchführen. Sie haben in der Regel mittlere Molmassen $M_w$ von oberhalb 500, vorzugsweise von mehr als 1.000. Beispiele für Schutzkolloide sind Polyvinylalkohole, Cellulosederivate wie Carboxymethylcellulose, Polyvinylpyrrolidon, Polyethylenglykole, Pfropfpolymerisate von Vinylacetat und/oder Vinylpropionat auf Polyethylenglykolen, ein-oder beidseitig mit Alkyl-, Carboxyl- oder Aminogruppen endgruppenverschlossene Polyethylenglykole, Polydiallyldimethylammoniumchloride und/oder Polysaccharide wie insbesondere wasserlösliche Stärken, Stärkederivate und Proteine. Solche Produkte werden beispielsweise beschrieben in Römpp, Chemie Lexikon 9. Auflage, Band 5, Seite 3569 oder in Houben-Weyl, Methoden der organischen Chemie, 4. Auflage, Band 14/2 Kapitel IV Umwandlung von Cellulose und Stärke von E. Husemann und R. Werner, Seiten 862 - 915 und in Ullmanns Encyclopedia for Industrial Chemistry, 6. Auflage, Band 28, Seiten 533 ff. unter Polysaccharides. Bevorzugte Schutzkolloide sind dabei Polyvinylalkohole und Cellulosederivate oder deren Gemisch.

Geeignet sind beispielsweise alle Arten von Stärke, z.B. sowohl Amylose als auch Amylopektin, native Stärken, hydrophob oder hydrophil modifizierte Stärken, anionische Stärken, kationisch modifizierte Stärken, abgebaute Stärken, wobei der Stärkeabbau beispielsweise oxidativ, thermisch, hydrolytisch oder enzymatisch vorgenommen werden kann und wobei für den Stärkeabbau sowohl native als auch modifizierte Stärken eingesetzt werden können. Weitere geeignete Schutzkolloide sind Dextrine und vernetzte wasserlösliche Stärken, die wasserquellbar sind.

Vorzugsweise setzt man als Schutzkolloid native, wasserlösliche Stärken ein, die beispielsweise mit Hilfe eines Stärkeaufschlusses in eine wasserlösliche Form überführt werden können sowie anionisch modifizierte Stärken wie oxidierte Kartoffelstärke. Besonders bevorzugt werden anionisch modifizierte Stärken, die einem Molekulargewichtsabbau unterworfen wurden. Der Molekulargewichtsabbau wird vorzugsweise enzymatisch durchgeführt. Die mittlere Molmasse $M_w$ der abgebauten Stärken beträgt beispielsweise 500 bis 100.000, vorzugsweise 1.000 bis 30.000. Die abgebauten Stärken haben beispielsweise eine intrinsische Viskosität [η] von 0,04 bis 0,5 dl/g. Solche Stärken werden beispielsweise in der EP-B-0 257 412 und in der EP-B-0 276 770 beschrieben. Falls bei der Polymerisation Schutzkolloide eingesetzt werden, betragen die angewendeten Mengen beispielsweise 0,5 bis 50, insbesondere 5 bis 40 Gew.-%, meistens 10 bis 30 Gew.-%, bezogen auf die bei der Polymerisation eingesetzten Monomeren.

Um die Eigenschaften der Polymeren zu modifizieren, kann man die Polymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren.

Die Öl-in-Wasser-Emulsion wird radikalisch polymerisiert. Die Polymerisation erfolgt meistens in Gegenwart mindestens eines radikalischen Polymerisationsinitiators. Als Polymerisationsinitiator kommen sämtliche Verbindungen in Betracht, die eine Polymerisation auslösen können. Im Wesentlichen handelt es sich hierbei um Peroxide, Hydroperoxide, Azoverbindungen und Redoxkatalysatoren. Beispiele für Initiatoren können der WO-A-99/40123, Seite 32, Zeile 45 bis Seite 34, Zeile 9 entnommen werden. Die Polymerisation kann auch durch Einwirkung energiereicher Strahlung wie UV- oder aktinischer oder radioaktiver Strahlung ausgelöst werden, wobei man gegebenenfalls in Gegenwart mindestens eines Sensibilisators arbeitet. Vorzugsweise setzt man solche Initiatoren ein, die sich in der Ölphase lösen. Die Polymerisation der Monomeren in der Miniemulsion kann auch elektrochemisch, mit Hilfe von Mikrowellenstrahlen und/oder durch Einwirkung von Ultraschall erfolgen. Die Polymerisationstemperatur beträgt beispielsweise 0 bis 120°C, wobei sie bei Temperaturen oberhalb von 100°C unter erhöhtem Druck in druckdichten Apparaturen vorgenommen wird. Meistens führt man die Suspensionspolymerisation der Öl-in-Wasser-Emulsion in dem Temperaturbereich von 0 bis 95°C durch.

Gegenstand der Erfindung ist außerdem ein Verfahren zur Herstellung von wässrigen Dispersionen von Polymeren, die einen mittleren Teilchendurchmesser von mindestens 1 $\mu$m haben und die einen Fluoreszenzfarbstoff enthalten, durch radikalische Suspensionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 1 $\mu$m aufweist, in Gegenwart mindestens einer oberflächenaktiven Verbindung, wobei man die Suspensionspolymerisation in Gegenwart von mindestens 0,5 Gew.-%, bezogen auf die Monomeren, mindestens einer hydrophoben, nichtpolymerisierbaren, organischen Verbindung, eines hydrophoben Polymeren aus mindestens einem $C_2$-bis $C_6$-Olefin, eines Siloxans mit einer Molmasse $M_W$ bis zu 5.000 und/oder Polystyrol mit einer Molmasse $M_W$ bis zu 10.000 durchführt.

Die Suspensionspolymerisation wird beispielsweise in Gegenwart von 0,5 bis 50 Gew.-%, bevorzugt in Gegenwart von 1 bis 20 Gew.-%, bezogen auf die Monomeren, einer hydrophoben, nichtpolymerisierbaren, organischen Verbindung, eines hydrophoben Polymeren aus mindestens einem $C_2$-bis $C_6$-Olefin, eines Siloxans mit einer Molmasse $M_W$ bis zu 5.000 und/oder eines Polystyrols mit einer Molmasse $M_W$ bis zu 10.000 durchgeführt. Die Suspensionspolymerisation wird vorzugsweise in Gegenwart von 0,5 bis 50 Gew.-% Hexadekan und/oder Weißöl, besonders bevorzugt in Gegenwart von 2 bis 20 Gew.-% Hexadekan und/oder Weißöl, durchgeführt.

Der Restmonomerengehalt der so hergestellten erfindungsgemäßen Dispersionen kann durch eine chemische Desodorierung wie beispielsweise von P.H.H. Araújo, C. Sayer, J. G. R. Poco, R. Giudici, in Polymer Engineering and Science, 2002 (42), 1442-1468 beschrieben oder in EP 1 375 530 B1 offenbart, reduziert werden.

Der Feststoffgehalt der wässrigen Dispersionen beträgt beispielsweise 10 bis 60 Gew.-%, vorzugsweise 20 bis 45 Gew.-% und liegt meistens in dem Bereich von 30 bis 45 Gew.-%.

Die dispergierten Polymerteilchen enthalten das Hydrophob und mindestens einen Fluoreszenzfarbstoff. Sie haben eine mittlere Teilchengröße von beispielsweise 1 bis 100 $\mu$m, vorzugsweise 1,1 bis 25 $\mu$m und meistens 1,1 bis 10$\mu$m und enthalten mindestens einen Fluoreszenzfarbstoff in einer Menge von beispielsweise 0,001 bis 10 Gew.-%, meistens von 0,01 bis 1 Gew.-%. Die hier angegebenen Teilchengrößen des feinteiligen Polymerisats sind gewichtsmittlere Teilchengrößen, wie sie durch Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die dispergierten Teilchen weisen eine einheitliche Teilchengrößenverteilung auf. Die Einheitlichkeit kann beispielsweise charakterisiert werden durch die sogenannte Uniformität $\dfrac{\sum X_i \, |\, d(v,0.5) - d_i \,|}{d(v,0.5) \sum X_i}$ , wobei $d_i$ der mittlere Durchmesser der Größenklasse $i$ ist, $X_i$ den gemessenen Beitrag dieser Größenklasse zur Größenverteilung bezeichnet, $d(v,0.5)$ für den volumengemittelten Median steht, und die Summe jeweils über alle Größenklassen i läuft (Mastersizer Reference Manual, Malvern Instruments Ltd., Spring Lane South, Malvern, Worcs. WR14 1AT, U.K.). Da die so definierte Uniformität Abweichungen vom Volumenmittel aufsummiert, bedeuten niedrige Werte eine größere Einheitlichkeit. Die Teilchen weisen in Streulichtmessungen mit Auswertung nach der Mie-Theorie eine Uniformität unterhalb von 1 auf.

Durch Trocknen der wässrigen Dispersionen erhält man Polymerteilchen, die einen mittleren Teilchendurch-

messer von mindestens 1 $\mu$m haben und die mindestens einen Fluoreszenzfarbstoff enthalten, in Form eines Pulvers. Beispiele für Trocknungsmethoden sind die Sprühtrocknung und die Gefriertrocknung. Die einzelnen Teilchen liegen in den Pulvern meistens als Aggregate mehrerer Einzelteilchen vor. Sie können beispielsweise einer Trocken- oder Nassvermahlung unterworfen werden. Man kann z. B. die Aggregate von Einzelteichen zu Teilchen mit einer mittleren Teilchengröße von 1 bis 100 $\mu$m vermahlen, hierbei ist jedoch darauf zu achten, dass die Partikel nicht mechanisch überansprucht und zerstört werden. Die Teilchengrößen liegen dann in einem Bereich, der für Polymerteilchen charakteristisch ist, die durch Miniemulsionspolymerisation hergestellt werden, z.B. nach dem aus der WO-A-99/40123 bekannten Verfahren.

Gegenstand der Erfindung ist außerdem die Verwendung von wässrigen Dispersionen von Polymeren, die erhältlich sind durch radikalische Suspensionspolymerisation oder durch radikalische Miniemulsionspolymerisation von ethylenisch ungesättigten Monomeren in einer Öl-in-Wasser-Emulsion, deren disperse Phase mindestens einen Fluoreszenzfarbstoff in mindestens einem ethylenisch ungesättigten Monomer gelöst enthält und einen mittleren Teilchendurchmesser von mindestens 10 nm aufweist, in Gegenwart mindestens einer oberflächenaktiven Verbindung und mindestens 0,5 Gew.-%, bezogen auf die Monomeren, mindestens einer hydrophoben, nichtpolymerisierbaren, organischen Verbindung, eines hydrophoben Polymeren aus mindestens einem $C_2$-bis $C_6$-Olefin mit einer Molmasse $M_w$ bis zu 10.000, eines Siloxans mit einer Molmasse $M_w$ bis zu 5.000 und/oder Polystyrol mit einer Molmasse $M_w$ bis zu 10.000, sowie der aus diesen Polymerdispersionen jeweils durch Trocknen erhältlichen mindestens einen Fluoreszenzfarbstoff enthaltenden Pulver zum Markieren von Materialien.

Vorzugsweise werden die durch Suspensionspolymerisation herstellbaren wässrigen Dispersionen von Polymeren, die mindestens einen Fluoreszenzfarbstoff und ein Hydrophob enthalten und eine mittlere Teilchengröße der dispergierten Teilchen von 1 $\mu$m bis 100 $\mu$m, insbesondere von 1,1 bis 25 $\mu$m aufweisen, zum Markieren von Materialien verwendet. Man kann jedoch auch die durch Miniemulsionspolymerisation nach dem aus der WO-A-99/40123 bekannten Verfahren erhältlichen wässrigen Dispersionen mit einem mittleren Teilchendurchmesser von <500 nm, wobei die geeigneten Dispersionen mindestens einen Fluoreszenzfarbstoff enthalten, sowie Dispersionen verwenden, deren Polymerteilchen einen mittleren Teilchendurchmesser von >500 nm bis zu 1.000 nm aufweisen und mindestens einen Fluoreszenzfarbstoff enthalten. Solche Dispersionen können beispielsweise dadurch hergestellt werden, dass man die mittlere Teilchengröße der in Wasser emulgierten Tröpfchen aus einer Lösung mindestens eines hydrophoben, ethylenisch ungesättigten Monomers, mindestens eines Hydrophobs und mindestens eines Fluoreszenzfarbstoffs auf einen Wert in dem Bereich von >500 nm bis zu 1.000 nm emulgiert und die so erhältliche Öl-in-Wasser-Emulsion in bekannter Weise radikalisch nach dem Verfahren der Suspensionspolymerisation polymerisiert.

Diese wässrigen Dispersionen sowie die durch Miniemulsionspolymerisation erhältlichen wässrigen Dispersionen von Polymeren, die jeweils mindestens einen Fluoreszenzfarbstoff und ein Hydrophob enthalten, sowie die aus den Dispersionen durch beispielsweise Sprühtrocknung herstellbaren Polymerpulver werden beispielweise zum Markieren von Lignocellulosewerkstoffen verwendet.

Sie werden dabei z. B. den zu markierenden Stoffen in einer Menge zugesetzt, die in den meisten Fällen so bemessen ist, dass die Markierung in oder auf den Materialien mit bloßem Auge nicht oder praktisch nicht zu erkennen ist.

Die Erkennung der Markierung erfolgt beispielsweise mit Hilfe der Laser-Rastermikroskopie, mit Hilfe eines Fluoreszenzmikroskops oder mit Hilfe eines Fluoreszenzspektrometers.

Der Feststoffgehalt der wässrigen Dispersionen beträgt üblicherweise 1 bis 70 Gew.-%, vorzugsweise 10 bis 50 Gew.-%. Diese Dispersionen können direkt oder nach Verdünnung mit einem Dispersionsmedium, vorzugsweise Wasser, zum Markieren verwendet werden.

Die mindestens einen Fluoreszenzfarbstoff enthaltenden Polymerteilchen, die zum Markieren von Lignocellulosewerkstoffen verwendet werden, verbessern die Lichtechtheit und sind in der Regel lichtecht, d.h. chemisch stabil gegenüber Sonnenstrahlung. Sie sind darüber hinaus in der Regel migrationsstabil, d.h. sie bluten nicht aus.

Aufgrund der speziellen fluoreszenzoptischen Eigenschaften der Partikel, ist eine gezielte Detektion bei der Analyse möglich. Diese werden gut von der eigenfluoreszierenden Matrix verdeckt und sind ohne messtechnische Hilfsmittel nicht detektierbar.

Das HICOM-Prinzip (Hierarchical Coding and Encoding of Materials), basiert auf der Einbringung, sowie der Detektion von fluoreszenzgefärbten Partikeln in eine Matrix.

Durch Kombination dieser Partikel wird zudem die Codierung eines Stoffes ermöglicht.

Mikroskopie

Bei der Mikroskopie wird in diesem Fall zwischen Lichtmikroskopie und Fluoreszenzmikroskopie unterschieden.

Lichtmikroskopische Untersuchungen sind sinnvoll, wenn es darum geht, die Oberfläche einer Probe oberhalb 1 $\mu$m sichtbar zu machen, während mit der Fluoreszenzmikroskopie auch fluoreszierende Partikel mit einem Durchmesser unterhalb von 1 $\mu$m beobachtet werden können. Bei der Fluoreszenzmikroskopie wird, wie bei der Fluoreszenzspektroskopie, mit einer Anregungswellenlänge, sowie einer Emissionswellenlänge gearbeitet. Prinzipiell werden diese beiden Lichtwellenlängen über geeignete optische Bandfilter eingestellt.

Durchflußcytometer

Die Durchflußcytometer ist eine, aus der Medizintechnik bekannte, in der chemischen Industrie jedoch relativ neue Methode, um fluoreszierende Partikel zu detektieren. Hierbei kann man davon ausgehen, dass Partikel, je nach Chemie, Hydrophobie etc. mit einem geeigneten Fluoreszenzfarbstoff unterschiedlich angefärbt werden können.

Diese Partikel werden mit einer auf den Farbstoff abgestimmten Wellenlänge angeregt. Die Emissionswellenlänge dieses fluoreszierenden Partikels wird detektiert und nach Größe und Anzahl ausgewertet.

Bei diesen Untersuchungen wurden kommerzielle Cytometer LSR II und Accuri C6 der Fa. BD-Biosciences verwendet. Der praktische Aufbau der Geräte besteht im Wesentlichen aus Lasern im Wellenlängenbereich zwischen 380 und 630 nm auf der Extinktionsseite, sowie Detektionseinheiten von 450 bis 780 nm auf der Emissionsseite. Die zu messende Probe, in einer Konzentration von ca. 1 mg/l, wird hydrodynamisch fokussiert und vereinzelt durch den Focus eines Lasers geführt. Das beim Passieren des Laserstrahls entstehende Streulicht, kann durch anschließende Detektion von mehreren Fluoreszenz-Detektoren nach enthaltener Farbstoffmenge, sowie nach Größe durch Vorwärts- und Seitwärtsstreuung synchron verarbeitet werden. Durch eine entsprechende Kalibrierung mit Referenzpartikeln ist es zudem möglich, aus der detektierten Farbstoffmengenverteilung eine Partikelgrößenverteilung zu berechnen. Die grafische Darstellung der Messungen erfolgt durch eine 2-dimensionale Auftragung mehrerer Fluoreszenzen gegeneinander, wobei hier auf sinnvolle Kombinationen geachtet werden muss. Auch die Auftragung von Vorwärts,- bzw. Seitwärtsstreuung gegen eine Fluoreszenz ist möglich.

Beispiele

Markierung von Holzwerkstoffen

Exemplarisch wurde die Markierung der Holzwerkstoffen demonstriert, indem Bindemittel mit Fluoreszenzfarbstoffen versetzt wurden (siehe Beispiele 2, 3 und 4) sowie indem Imprägnierharzflotten mit Fluoreszenzfarbstoffen versetzt wurden (siehe Beispiele 6 und 7) und die Markierungsmittel anschließend fluoreszenzmikroskopisch nachgewiesen wurden.

Die Markierungsmittel werden im Folgenden als "HICOM" bezeichnet.

Herstellung des Markierungsmittel ("HICOM), d.h. der wässrigen Dispersion von Polymeren, die einen Fluoreszenzfarbstoff enthalten

### Wasserphase

| | |
|---|---|
| 419,60 g | VE-Wasser |
| 274,89 g | einer 10% wässrigen Lösung von Polyvinylalkohol (Mowiol 40-88, Fa. Kuraray) |
| 2,64 g | einer 2,5% wässrigen Natriumnitritlösung |

### Ölphase

| | |
|---|---|
| 264 g | Methylmethacrylat |
| 33 g | 1,4-Butandioldiacrylat |
| 33 g | Methacrylsäure |
| 16,50 g | Weißöl W530 |
| 0,01 g | Lumogen F Rosa 285 |
| 0,28 g | Aceton |

### Zugabe 1

| | |
|---|---|
| 2,31 g | tert.-Butylperpivalat (75%ig) |

### Zugabe 2

| | |
|---|---|
| 7,70 g | tert.-Butylhydroperoxid (10%ig) |

Zulauf 1

| 20 g | VE-Wasser |
|---|---|
| 0,44 g | Ascorbinsäure |

Die Wasserphase wurde vorgelegt, die Ölphase wurde zugegeben und es wurde 30 Minuten bei 5000 Upm mit einem schnelllaufenden Disolverrührer dispergiert. Anschließend wurde Zugabe 1 zugegeben und in 60 Minuten bei 130 Upm auf 60°C erwärmt. Anschließend wurde in 120 Minuten auf 70°C und dann in 30 Minuten auf 85°C erhitzt und für 60 Minuten auf 85°C gehalten. Zugabe 2 wurde zugegeben und Zulauf 1 in 60 Minuten bei 85°C zudosiert. Es wurde auf Raumtemperatur abgekühlt und eine wässrige Dispersion mit einem Feststoffgehalt von 33,6 % und einer Teilchengröße von D[0,5] = 2,88 μm erhalten.

Herstellung der Imprägnierharzflotte

Eine 60 Gew.-%ige wässrige Lösung von Kauramin® Tränkharzes 796 flüssig der Firma BASF SE (Technisches Merkblatt, M 6376 d, Juni 2012, BASF SE) im Molverhältnis von Formaldehyd zu Melamin von 1,65:1 wurde mit 0,3 Gewichtsprozent des Härters H529 (Technisches Merkblatt, M 6225 e, Februar 2008, BASF SE) und 7 Gewichtsprozent Wasser versetzt, so dass eine Harzlösung mit einer Trübzeit von 290 Sekunden resultierte. Derartige wässrige Lösungen aus Melaminharz und Härter werden allgemein als "Imprägnierharzflotte" oder "Flotte" bezeichnet. Dieser Imprägnierharzflotte wurden die Fluoreszenzpartikel durch Zumischen einer 30 gewichtsprozentigen wässrigen Fluoreszenzpartikel-Stammlösung zugegeben (Beispiel: Zugabe von 30 mg Stammlösung ergibt 9 mg HICOM Partikel auf 1 kg Harz).

Herstellung der Overlay- und Dekorimprägnate

Mit der wie oben hergestellten Flotte wurde Overlaypapier (Flächengewicht 25 g/m$^2$) bzw. weißes Dekorpapier (Flächengewicht 75 g/m$^2$), im Umluft-Trockenschrank bei 120°C 3 Minuten getrocknet. Die so erhaltenen Papiere hatten folgende Harzaufträge: 200% für Overlay, 115% für Dekorpaper sowie einen Restfeuchtegehalte von 6,5%.

Verpressungen der Imprägnate

Die Overlay-Imprägnate wurden anschließend unter Druck (25 bar) und einer Temperatur von 180°C gemeinsam mit weißen Dekorimprägnaten auf 6 mm dicken Holzfaserplatten 30 Sekunden verpresst und nach Abkühlung auf Raumtemperatur und Lagerung über mindestens 24 Stunden fluoreszenzmikroskopisch untersucht.

Herstellung der Leimflotte

Eine 67 gew.-%ige wässrige Lösung von Kaurit® Leim 347 flüssig der Firma BASF SE (Technisches Merkblatt, M 6167 d, Februar 2008, BASF SE) im Molverhältnis von Formaldehyd zu Harnstoff von 1,09:1 wurde mit 0,4 Gew.-% einer 52 gew.-%igen wässrigen Ammoniumnitratlösung und 14 Gew.-% Wasser versetzt.
Dieser Leimflotte wurden die Fluoreszenzpartikel durch Zumischen einer 30 gew.-%igen wässrigen Fluoreszenzpartikel-Stammlösung zugegeben (Beispiele: Zugaben von 3,33 g, 333 mg bzw. 33 mg Stammlösung pro kg Leim resultieren in 1.000 mg, 100 mg, 10 mg HICOM pro kg Leim.

Plattenherstellung

950 g oben hergestellten Leimlösung werden mit 5,4 kg Holzspänen vermischt, so dass eine Beleimung von 10% atro (atro = Festharz auf trockenes Holz) resultiert. Die beleimten Holzspäne werden in einer Heißpresse bei 210°C und über 180 sec zu einer 19 mm dicken Holzspanplatte gepresst, wobei der Pressdruck nach 60 Sekunden von anfänglich 40 bar auf 20 bar und nach weiteren 60 Sekunden auf 10 bar reduziert wird. Nach Abkühlung auf Raumtemperatur und Lagerung über mindestens 24 Stunden werden die so erhaltenen Holzspanplatten fluoreszenzmikroskopisch untersucht.

Analytik und Versuchsergebnisse

Nach dem oben beschriebenen Verfahren wurden mit HICOM dotierte Spanplatten hergestellt und mit einem Fluoreszenzmikroskop BZ 8000 (Firma Keyence) untersucht.
Als Kriterium für einen erfolgreichen Nachweis der HICOM Partikel in Spanplatten wurde eine Anzahl von mindestens

HICOM- Partikeln pro Bildausschnitt der Größe 2,3x1,7 mm festgelegt.

Overlay- und Dekorpapiere können bereits in geringen Mengen fluoreszenzaktive Stoffe enthalten, die mit HICOM Partikeln verwechselt werden können. Hier wurde als Kriterium für einen erfolgreichen Nachweis der HICOM Partikeln eine Anzahl von mindestens 100 HICOM Partikeln pro Bildausschnitt der Größe 2,3x1,7 mm gewählt.

| Beispiel Nr.: | 1 | 2 | 3 | 4 |
|---|---|---|---|---|
| HICOM Anteil in Leimlösung | 0 ppm | 10 ppm (10 mg HICOM pro 1 kg Leim) | 100 ppm (100 mg HICOM pro 1 kg Leim) | 1.000 ppm (1.000 mg HICOM pro 1 kg Leim) |
| HICOM Anteil in Spanplatte | 0 ppm | 1,5 ppm (9,5 mg HICOM pro 6,35 kg Spanplatte) | 15 ppm (95 mg HICOM pro 6,35 kg Spanplatte) | 150 ppm (950 mg HICOM pro 6,35 kg Spanplatte) |
| Anzahl HICOM Partikel pro Bildausschnitt | 0 | 3 | >6 | >30 |
| Nachweis erfolgreich | Nein | Nein | Ja | Ja |

| Beispiel Nr.: | 5 | 6 |
|---|---|---|
| HICOM Anteil in Overlay-Imprägnierlösung | 0 ppm | 9 ppm (9 mg HICOM pro kg Tränkharz) |
| HICOM Anteil im Overlay bestehend aus 50g Tränkharz und 25g Overlaypapier | 0 ppm | 6 ppm |
| Anzahl Partikel pro Bildausschnitt | <20 | >500 |
| Nachweis erfolgreich | Nein | Ja |

**Patentansprüche**

1. Lignocellulosewerkstoffe, die

A) 30 bis 98,9997 Gew.-% lignocellulosehaltige Stoffe (Komponente A),
B) 1 bis 50 Gew.-% eines Bindemittels, ausgewählt aus der Gruppe bestehend aus Aminoplastharz, Phenolformaldehydharz, organischem Isocyanat mit mindes-tens zwei Isocyanatgruppen oder deren Gemischen, gegebenenfalls mit einem Härter (Komponente B),
C) 0 bis 25 Gew.-% expandierte Kunststoffteilchen mit der Schüttdichte im Bereich von 10 bis 150 kg/m$^3$ (Komponente C) und
D) 0 bis 50 Gew.-% mikrofibrillierte Cellulose (Komponente D),
E) 0 bis 10 Gew.-% Dekorpapier (Komponente E),
F) 0 bis 10 Gew.-% Dekorlack (Komponente F),
G) 0 bis 50 Gew.-% Additive (Komponente G),
H) 0,0003 bis 3 Gew.-% eines Markierungsmittels (Komponente H),

**dadurch gekennzeichnet, dass** das Markierungsmittel (Komponente H)

a) ein einzelner Farbstoff oder eine Mischung aus 2 bis 12 verschiedenen Farbestoffen ausgewählt aus der Gruppe Cumarin-, Perylen-, Terrylen-, Quaterrylen-, Naphthalimid-, Cyanin-, Xanthen- Oxazin-, Anthracen-, Naphthacen-, Anthrachinon- oder Thiazin-Farbstoffe ist und
b) Polymerpartikel mit einer Teilchengrößenverteilung im Bereich von 0,05 bis 50 μm sind, in die ein Fluoreszenzfarbstoff eingebettet ist

und das Gewichtsverhältnis von wässriger Dispersion (Komponente H) zum lignocellulosehaltigen Stoff (Komponente A) 0,001:1 bis 0,2:1 beträgt.

**2.** Lignocellulosewerkstoffe nach Anspruch 1, **dadurch gekennzeichnet, dass** man für das Polymer im Markierungsmittel (Komponente H) als ethylenisch ungesättigte Monomere

(a) hydrophobe Monomer aus der Gruppe $C_1$- bis $C_8$-Alkylester der Acrylsäure. $C_1$- bis $C_8$-Alkylester der Methacrylsäure, Vinylacetat, Vinylpropionat, Vinylbutyrat, Styrol, Chlorstyrol und/oder $\alpha$-Methylstyrol,
(b) gegebenenfalls hydrophile Monomere aus der Gruppe ethylenisch ungesättigten $C_3$-bis $C_8$-Carbonsäuren, Vinylsulfonsäure, 2-Acrylamido-2-methylpropansulfonsäure, Sulfopropylacrylat, Sulfopropylmethacrylat, Styrolsulfonsäure, Salze der genannten Säuren, Acrylnitril, Methacrylnitril, $C_1$-bis $C_8$-Hydroxialkylester von $C_1$- bis $C_6$-Carbonsäuren, Di-$C_1$- bis $C_3$-alkylamino-$C_2$- bis $C_4$-alkylacrylate, Di-$C_1$-bis $C_3$-alkylamino-$C_2$- bis $C_4$-alkylmethacrylate, Acrylamid, Methacrylamid , N-Vinylformamid und/oder N-Vinylpyrrolidon und
(c) gegebenenfalls mindestens ein vernetzend wirkendes Monomer mit mindestens zwei Doppelbindungen im Molekül

einsetzt.

**3.** Lignocellulosewerkstoff nach einem der Ansprüche 1 bis 2, **dadurch gekennzeichnet, dass** die für das Polymer im Markierungsmittel (Komponente H) eingesetzten Monomergemische

(a) 60 bis 100 Gew.-% mindestens eines hydrophoben Monomeren,
(b) 0 bis 30 Gew.-% mindestens eines hydrophilen Monomeren und
(c) 0 bis 40 Gew.-% mindestens eines vernetzend wirkenden Monomeren mit mindestens zwei Doppelbindungen

enthalten.

**4.** Lignocellulosewerkstoffe nach einem der Ansprüche 1 bis 3, **dadurch gekennzeichnet, dass** das Markierungsmittel (Komponente H) Polymerpartikel mit einer Teilchengrößenverteilung im Bereich von 0,5 bis 20 $\mu$m sind, in die ein Fluoreszenzfarbstoff eingebettet ist.

**5.** Lignocellulosewerkstoffe nach einem der Ansprüche 1 bis 4, **dadurch gekennzeichnet, dass** das Markierungsmittel (Komponente H) Polymerpartikel mit einer Teilchengrößenverteilung im Bereich von 1 bis 10 $\mu$m sind, in die ein Fluoreszenzfarbstoff eingebettet ist.

**6.** Lignocellulosewerkstoffe nach einem der Ansprüche 1 bis 5, **dadurch gekennzeichnet, dass** das Markierungsmittel (Komponente H) eine wässrige Dispersion ist, die 0,00005 bis 60 Gew.-% Fluoreszenzfarbstoff(e) enthaltende Polymerpartikel enthält.

**7.** Lignocellulosewerkstoffe nach einem der Ansprüche 1 bis 6, **dadurch gekennzeichnet, dass** das Gewichtsverhältnis von wässriger Dispersion (Komponente H) zur Komponente A 0,0001:1 bis 0,2:1 beträgt.

**8.** Lignocellulosewerkstoffe nach einem der Ansprüche 1 bis 7, **dadurch gekennzeichnet, dass** der Lignocellulosewerkstoff teilweise oder vollständig, ungleichmäßig oder homogen verteilt, markiert ist.

**9.** Lignocellulosewerkstoffe nach einem der Ansprüche 1 bis 8, **dadurch gekennzeichnet, dass** der Lignocellulosewerkstoff vollständig markiert ist.

**10.** Lignocellulosewerkstoffe nach einem der Ansprüche 1 bis 9, **dadurch gekennzeichnet, dass** der Lignocellulosewerkstoff vollständig und homogen verteilt markiert ist.

**11.** Lignocellulosewerkstoff nach einem der Ansprüche 1 bis 10, **dadurch gekennzeichnet, dass** der Lignocellulosewerkstoff unvollständig markiert ist und sich die Markierung auf mindestens einer der Oberflächen des Holzwerkstoffs befindet.

**12.** Verfahren zur Herstellung von Lignocellulosewerkstoffen nach einem der Ansprüche 1 bis 11, **dadurch gekennzeichnet, dass** man das Markierungsmittel (Komponente H) zunächst mit mindestens einer Komponente ausgewählt aus der Gruppe A), B), C), D) oder G) mischt, bevor die behandelte(n) Komponente(n) mit den nicht-behandelten Komponenten ausgewählt aus der Gruppe A), B), C), D) oder G) vermischt werden.

**13.** Verfahren zur Herstellung von Lignocellulosewerkstoffen nach einem der Ansprüche 1 bis 12, **dadurch gekenn-**

**zeichnet, dass** man das Markierungsmittel (Komponente H) mit Komponente E) mischt und die markierte Komponente E) verwendet wird zur Beschichtung mindestens einer Oberfläche eines Lignocellulosewerkstoffs bestehend aus den Komponenten A), B), C), D), F) und G).

14. Verfahren zur Herstellung von Lignocellulosewerkstoffen nach einem der Ansprüche 1 bis 13, **dadurch gekennzeichnet, dass** man das Markierungsmittel (Komponente H) mit Komponente F) mischt und die markierte Komponente F) verwendet wird zur Beschichtung mindestens einer Oberfläche eines Lignocellulosewerkstoffs bestehend aus den Komponenten A), B), C), D), E) und G).

15. Verwendung eines Markierungsmittels (Komponente H) zur Kennzeichnung von Lignocellulosewerkstoffen nach einem der Ansprüche 1 bis 11.

**Claims**

1. A lignocellulosic engineering material comprising

    A) 30 to 98.9997 wt% of lignocellulosic substances (component A),
    B) 1 to 50 wt% of a binder selected from the group consisting of amino resin, phenol-formaldehyde resin, organic isocyanate having two or more isocyanate groups, or mixtures thereof, optionally with a curing agent (component B),
    C) 0 to 25 wt% of expanded plastics particles having a bulk density in the range from 10 to 150 kg/m$^3$ (component C), and
    D) 0 to 50 wt% of microfibrillated cellulose (component D),
    E) 0 to 10 wt% of decorative paper (component E),
    F) 0 to 10 wt% of decorative lacquer (component F),
    G) 0 to 50 wt% of additives (component G),
    H) 0.0003 to 3 wt% of a marking agent (component H),

wherein the marking agent (component H) comprises

    a) a single dye or a mixture of 2 to 12 different dyes selected from the group coumarin, perylene, terrylene, quaterrylene, naphthalimide, cyanine, xanthene, oxazine, anthracene, naphthacene, anthraquinone or thiazine dyes and
    b) polymeric particles having a particle size distribution in the range from 0.05 to 50 $\mu$m which comprise an embedded fluorescent dye

the weight ratio of aqueous dispersion (component H) to lignocellulosic substance (component A) is in the range from 0.001:1 to 0.2:1.

2. The lignocellulosic engineering material according to claim 1 wherein the polymer in the marking agent (component H) utilizes as ethylenically unsaturated monomers

    (a) hydrophobic monomers from the group $C_1$- to $C_8$-alkyl esters of acrylic acid, $C_1$- to $C_8$-alkyl esters of methacrylic acid, vinyl acetate, vinyl propionate, vinyl butyrate, styrene, chlorostyrene and/or $\alpha$-methylstyrene,
    (b) optionally hydrophilic monomers from the group ethylenically unsaturated $C_3$- to $C_8$-carboxylic acids, vinylsulfonic acid, 2-acrylamido-2-methylpropanesulfonic acid, sulfopropyl acrylate, sulfopropyl methacrylate, styrenesulfonic acid, salts of said acids, acrylonitrile, methacrylonitrile, $C_1$- to $C_8$-hydroxyalkyl esters of $C_1$- to $C_6$-carboxylic acids, di-$C_1$- to $C_3$-alkylamino-$C_2$- to $C_4$-alkyl acrylates, di-$C_1$- to $C_3$-alkylamino-$C_2$- to $C_4$-alkyl methacrylates, acrylamide, methacrylamide, N-vinylformamide and/or N-vinylpyrrolidone, and
    (c) optionally at least one crosslinking monomer having at least two double bonds in the molecule.

3. The lignocellulosic engineering material according to either of claims 1 and 2 wherein the monomer mixtures used for the polymer in the marking agent (component H) comprise

    (a) 60 to 100 wt% of at least one hydrophobic monomer,
    (b) 0 to 30 wt% of at least one hydrophilic monomer, and
    (c) 0 to 40 wt% of at least one crosslinking monomer having at least two double bonds.

4. The lignocellulosic engineering material according to any of claims 1 to 3 wherein the marking agent (component H) comprises polymeric particles having a particle size distribution in the range from 0.5 to 20 $\mu$m which comprise an embedded fluorescent dye.

5. The lignocellulosic engineering material according to any of claims 1 to 4 wherein the marking agent (component H) comprises polymeric particles having a particle size distribution in the range from 1 to 10 $\mu$m which comprise an embedded fluorescent dye.

6. The lignocellulosic engineering material according to any of claims 1 to 5 wherein the marking agent (component H) is an aqueous dispersion comprising 0.00005 to 60 wt% of polymeric particles comprising fluorescent dye(s).

7. The lignocellulosic engineering material according to any of claims 1 to 6 wherein the weight ratio of aqueous dispersion (component H) to component A is in the range from 0.0001:1 to 0.2:1.

8. The lignocellulosic engineering material according to any of claims 1 to 7 wherein the marking which marks the lignocellulosic engineering material is partial or complete, homogeneously or nonuniformly distributed.

9. The lignocellulosic engineering material according to any of claims 1 to 8 wherein the marking which marks the lignocellulosic engineering material is complete.

10. The lignocellulosic engineering material according to any of claims 1 to 9 wherein the marking which marks the lignocellulosic engineering material is complete and homogeneously distributed.

11. The lignocellulosic engineering material according to any of claims 1 to 10 wherein the marking which marks the lignocellulosic engineering material is incomplete and situated on at least one of the surfaces of the wood-base material.

12. A process for producing lignocellulosic engineering materials according to any of claims 1 to 11, which comprises mixing the marking agent (component H) with at least one component selected from group A), B), C), D) or G) and then mixing the treated component(s) with the untreated components selected from group A), B), C), D) or G).

13. A process for producing lignocellulosic engineering materials according to any of claims 1 to 12, which comprises mixing the marking agent (component H) with component E) and using said marked component E) for coating at least one surface of a lignocellulosic engineering material consisting of components A), B), C), D), F) and G).

14. A process for producing lignocellulosic engineering materials according to any of claims 1 to 13, which comprises mixing the marking agent (component H) with component F) and using said marked component F) for coating at least one surface of a lignocellulosic engineering material consisting of components A), B), C), D), E) and G).

15. A method of using a marking agent (component H) for hallmarking lignocellulosic engineering materials according to any of claims 1 to 11.

**Revendications**

1. Matériaux lignocellulosiques, qui contiennent :

A) 30 à 98,9997 % en poids de matières lignocellulosiques (composant A),
B) 1 à 50 % en poids d'un liant, choisi dans le groupe constitué par une résine aminoplaste, une résine de phénol-formaldéhyde, un isocyanate organique contenant au moins deux groupes isocyanate ou leurs mélanges, éventuellement avec un durcisseur (composant B),
C) 0 à 25 % en poids de particules plastiques expansées ayant une densité apparente dans la plage allant de 10 à 150 kg/m$^3$ (composant C), et
D) 0 à 50 % en poids de cellulose microfibrillée (composant D),
E) 0 à 10 % en poids de papier décoratif (composant E),
F) 0 à 10 % en poids de vernis décoratif (composant F),
G) 0 à 50 % en poids d'additifs (composant G),
H) 0,0003 à 3 % en poids d'un agent marqueur (composant H),

**caractérisé en ce que** l'agent marqueur (composant H)

a) est un colorant individuel ou un mélange de 2 à 12 colorants différents choisis dans le groupe constitué par les colorants coumarine, pérylène, terrylène, quaterrylène, naphtalimide, cyanine, xanthène, oxazine, anthracène, naphtacène, anthraquinone ou thiazine, et
b) est constitué par des particules polymères ayant une distribution des tailles de particules dans la plage allant de 0,05 à 50 $\mu$m, dans lesquelles un colorant fluorescent est incorporé,

et le rapport en poids entre la dispersion aqueuse (composant H) et la matière lignocellulosique (composant A) est de 0,001:1 à 0,2:1.

2. Matériaux lignocellulosiques selon la revendication 1, **caractérisés en ce que**, pour le polymère dans l'agent marqueur (composant H), en tant que monomères éthyléniquement insaturés,

(a) un monomère hydrophobe du groupe constitué par les esters alkyliques en $C_1$ à $C_8$ de l'acide acrylique, les esters alkyliques en $C_1$ à $C_8$ de l'acide méthacrylique, l'acétate de vinyle, le propionate de vinyle, le butyrate de vinyle, le styrène, le chlorostyrène et/ou l'$\alpha$-méthylstyrène,
(b) éventuellement des monomères hydrophiles du groupe constitué par les acides carboxyliques en $C_3$ à $C_8$ éthyléniquement insaturés, l'acide vinylsulfonique, l'acide 2-acrylamido-2-méthylpropanesulfonique, l'acrylate de sulfopropyle, le méthacrylate de sulfopropyle, l'acide styrène-sulfonique, les sels des acides mentionnés, l'acrylonitrile, le méthacrylonitrile, les esters hydroxyalkyliques en $C_1$ à $C_8$ d'acides carboxyliques en $C_1$ à $C_6$, les acrylates de di-alkylamino en $C_1$ à $C_3$-alkyle en $C_2$ à $C_4$, les méthacrylates de di-alkylamino en $C_1$ à $C_3$-alkyle en $C_2$ à $C_4$, l'acrylamide, le méthacrylamide, le N-vinylformamide et/ou la N-vinylpyrrolidone, et
(c) éventuellement au moins un monomère à effet réticulant contenant au moins deux doubles liaisons par molécule,

sont utilisés.

3. Matériau lignocellulosique selon l'une quelconque des revendications 1 à 2, **caractérisé en ce que** les mélanges de monomères utilisés pour le polymère dans l'agent marqueur (composant H) contiennent

(a) 60 à 100 % en poids d'au moins un monomère hydrophobe,
(b) 0 à 30 % en poids d'au moins un monomère hydrophile et
(c) 0 à 40 % en poids d'au moins un monomère à effet réticulant contenant au moins deux doubles liaisons.

4. Matériaux lignocellulosiques selon l'une quelconque des revendications 1 à 3, **caractérisés en ce que** l'agent marqueur (composant H) est constitué par des particules polymères ayant une distribution des tailles de particules dans la plage allant de 0,5 à 20 $\mu$m, dans lesquelles un colorant fluorescent est incorporé.

5. Matériaux lignocellulosiques selon l'une quelconque des revendications 1 à 4, **caractérisés en ce que** l'agent marqueur (composant H) est constitué par des particules polymères ayant une distribution des tailles de particules dans la plage allant de 1 à 10 $\mu$m, dans lesquelles un colorant fluorescent est incorporé.

6. Matériaux lignocellulosiques selon l'une quelconque des revendications 1 à 5, **caractérisés en ce que** l'agent marqueur (composant H) est une dispersion aqueuse qui contient 0,00005 à 60 % en poids de particules polymères contenant un ou plusieurs colorants fluorescents.

7. Matériaux lignocellulosiques selon l'une quelconque des revendications 1 à 6, **caractérisés en ce que** le rapport en poids entre la dispersion aqueuse (composant H) et le composant A est de 0,0001:1 à 0,2:1.

8. Matériaux lignocellulosiques selon l'une quelconque des revendications 1 à 7, **caractérisés en ce que** le matériau lignocellulosique est marqué en partie ou en totalité, par distribution non uniforme ou homogène.

9. Matériaux lignocellulosiques selon l'une quelconque des revendications 1 à 8, **caractérisés en ce que** le matériau lignocellulosique est marqué en totalité.

10. Matériaux lignocellulosiques selon l'une quelconque des revendications 1 à 9, **caractérisés en ce que** le matériau lignocellulosique est marqué en totalité et par distribution homogène.

**11.** Matériaux lignocellulosiques selon l'une quelconque des revendications 1 à 10, **caractérisés en ce que** le matériau lignocellulosique n'est pas marqué en totalité et le marquage se trouve sur au moins une des surfaces du matériau à base de bois.

**12.** Procédé de fabrication de matériaux lignocellulosiques selon l'une quelconque des revendications 1 à 11, **caractérisé en ce que** l'agent marqueur (composant H) est tout d'abord mélangé avec au moins un composant choisi dans le groupe constitué par A), B), C), D) ou G), avant de mélanger le ou les composants traités avec les composants non traités choisis dans le groupe constitué par A), B), C), D) ou G) .

**13.** Procédé de fabrication de matériaux lignocellulosiques selon l'une quelconque des revendications 1 à 12, **caractérisé en ce que** l'agent marqueur (composant H) est mélangé avec le composant E) et le composant E) marqué est utilisé pour le revêtement d'au moins une surface d'un matériau lignocellulosique constitué par les composants A), B), C), D), F) et G).

**14.** Procédé de fabrication de matériaux lignocellulosiques selon l'une quelconque des revendications 1 à 13, **caractérisé en ce que** l'agent marqueur (composant H) est mélangé avec le composant F) et le composant F) marqué est utilisé pour le revêtement d'au moins une surface d'un matériau lignocellulosique constitué par les composants A), B), C), D), E) et G) .

**15.** Utilisation d'un agent marqueur (composant H) pour la caractérisation de matériaux lignocellulosiques selon l'une quelconque des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005118650 A
- WO 2007074041 A
- DE 20108991 U
- US 5112875 A
- WO 0050480 A
- WO 2010149711 A
- WO 2011055148 A
- WO 2011051882 A
- EP 51230 A
- EP 402866 A

- US 6379594 B
- EP 726356 A
- WO 9940123 A
- EP 0692517 B
- WO 9634903 A
- EP 0112592 B
- EP 0257412 B
- EP 0276770 B
- EP 1375530 B1

**In der Beschreibung aufgeführte Nicht-Patentliteratur**

- **M. DUNKY ; P. NIEMZ.** Holzwerkstoffe und Leime. Springer Verlag Heidelberg, 2002, 91-156
- Duroplaste. Kunststoff-Handbuch. Hanser, 1988, vol. 10, 12-40
- Aminoplaste. Ullmanns Enzyklopädie der technischen Chemie. Verlag Chemie, 1973, 403-424
- Amino Resins. Ullmann's Encyclopedia of Industrial Chemistry. VCH Verlagsgesellschaft, 1985, vol. A2, 115-141
- **M. DUNKY ; P. NIEMZ.** Holzwerkstoffe und Leime. Springer, 2002, 251-259
- Polyurethane. **BECKER ; BRAUN.** Kunststoff Handbuch. Hanser, 1993, vol. 7, 17-21, 76-88, 665-671
- Polyurethane. **BECKER ; BRAUN.** Kunststoff Handbuch. Hanser, 1993, vol. 7, 18
- **MICHAEL SZYCHER.** Szycher's Handbook of Polyurethanes. CRC Press, 1999, 10-1, 10-20
- **M. DUNKY ; P. NIEMZ.** Holzwerkstoffe und Leime. Springer, 2002, 265-269
- **M. DUNKY ; P. NIEMZ.** Holzwerkstoffe und Leime. Springer, 2002, 341-352
- **M. DUNKY ; P. NIEMZ.** Holzwerkstoffe und Leime. Springer, 2002, 385-391
- Ullmann's Encyclopedia. 2000
- Polystyrol. Electronic Release oder Kunststoff-Handbuch. 1996, vol. 4, 567-598

- Polystyrol. Kunststoff Handbuch 1996. Hanser, 1996, vol. 4, 640-673
- *Cellulose,* 2010, vol. 17, 459
- *Tappi Journal,* 1962, vol. 45 (1), 38-45
- **M. DUNKY ; P. NIEMZ.** Holzwerkstoffe und Leime. Springer, 2002, 436-444
- **M. DUNKY ; P. NIEMZ.** Holzwerkstoffe und Leime. Springer, 2002, 91-150
- *Analytiker-Taschenbuch,* 1984, vol. 4, 433-442
- **RÖMPP.** Chemie Lexikon. vol. 5, 3569
- **HOUBEN-WEYL.** Methoden der organischen Chemie. vol. 14/2
- **E. HUSEMANN ; R. WERNER.** *Umwandlung von Cellulose und Stärke,* 862-915
- Ullmanns Encyclopedia for Industrial Chemistry. vol. 28, 533 ff
- **P.H.H. ARAÚJO ; C. SAYER ; J. G. R. POCO ; R. GIUDICI.** *Polymer Engineering and Science,* 2002, vol. 42, 1442-1468
- **D. DISTLER.** Wässrige Polymerdispersionen. Wiley-VCH, 1999, 40ff
- **D. HORN.** *J. Colloid Interf. Sci.,* 1985, vol. 105, 399
- **D. LILGE ; D. HORN.** *Colloid Polym. Sci.,* 1991, vol. 269, 704
- **H. WIESE ; D. HORN.** *J. Chem. Phys.,* 1991, vol. 94, 6429